# EUROPÄISCHE PATENTANMELDUNG

(11) **EP 4 130 895 A1**
(43) Veröffentlichungstag der Anmeldung: **08.02.2023**
(21) Anmeldenummer: 21189828.3
(22) Anmeldetag: 05.08.2021
(51) Int. Cl.: G05B 13/04, G05B 13/02, G06N 3/08, B21B 13/00

(54) **VERFAHREN ZUM ERMITTELN EINES STEUERPARAMETERS ZUM STEUERN EINER WALZANLAGE**

(71) Anmelder: Primetals Technologies Germany GmbH, 91058 Erlangen (DE)
(72) Erfinder: Kerschensteiner, Martin, 92348 Berg (DE); Thekale, Alexander, 91058 Erlangen (DE)
(74) Vertreter: Metals@Linz

(57) **Zusammenfassung**

Computerimplementiertes Verfahren zum Ermitteln wenigstens eines Sollwertes eines Steuerparameters zum Steuern wenigstens eines Stellgliedes einer Walzanlage,
wobei das erste Vorhersagemodell anhand des Sollwertes des Steuerparameters einen ersten Erwartungswert für wenigstens einen technischen Parameter des Walzgutes nach dem Walzen mit dem Sollwert des Steuerparameters des Stellgliedes der Walzanlage ermittelt,
wobei das zweite Vorhersagemodell anhand des adaptierten Sollwertes des Steuerparameters einen zweiten Erwartungswert für den wenigstens einen technischen Parameter des Walzgutes nach dem Walzen mit dem adaptierten Sollwert des Steuerparameters des Stellgliedes der Walzanlage ermittelt,
wobei der erste Erwartungswert und der zweite Erwartungswert mit einem Sollwert des technischen Parameters für das gewalzte Walzgut verglichen werden, und wobei abhängig von dem Ergebnis des Vergleichs ein neuer adaptierter Sollwert des Steuerparameters des Stellgliedes mit einem Optimierungsmodul in der Weise ermittelt wird, dass das zweite Vorhersagemodell mit dem neuen adaptierten Sollwert des Steuerparameters einen zweiten Erwartungswert ermittelt, der näher am Sollwert des technischen Parameters des gewalzten Walzgutes liegt als der vorhergehende zweite Erwartungswert, und wobei der neue adaptierte Sollwert des Steuerparameters für eine Steuerung und/oder Regelung des Stellgliedes der Walzanlage vorgesehen ist.

## Beschreibung

Die Erfindung betrifft ein computerimplementiertes Verfahren zum Ermitteln eines Steuerparameters zum Steuern wenigstens eines Stellgliedes einer Walzanlage, ein computerimplementiertes Verfahren zum Betreiben einer Walzanlage, ein Rechensystem zum Durchführen der Verfahren und ein Computerprogramm.

Aus WO 03/078086 A1 ist ein rechnergeschütztes Ermittlungsverfahren für Sollwerte für Profil- und Planheitsstellglieder eines Walzgerüstes zum Walzen eines Walzgutes bekannt. Dabei werden einem Materialflussmodell Eingangsgrößen zugeführt, die das Walzgut vor und nach dem Durchlaufen des Walzgerüsts beschreiben, wobei das Materialflussmodell online einen Walzkraftverlauf in der Bandbreitenrichtung ermittelt und einem Walzenverformungsmodell zuführt. Das Walzenverformungsmodell ermittelt unter Heranziehen des Walzkraftverlaufs sich ergebende Walzenverformungen. Ein Sollwertermittler ermittelt anhand der Walzenverformungen und anhand eines auslaufseitigen Konturverlaufs die Sollwerte für die Profil- und Planheitsstellglieder.

Eine Aufgabe der Erfindung besteht darin, ein verbessertes Verfahren zum Ermitteln eines Steuerparameters zum Steuern eines Stellgliedes einer Walzanlage bereitzustellen. Eine weitere Aufgabe der Erfindung besteht darin, ein verbessertes Verfahren zum Betreiben einer Walzanlage zum Walzen eines Walzgutes bereitzustellen. Zudem besteht die Aufgabe der Erfindung darin, ein Rechensystem zum Ermitteln eines Steuerparameters zum Steuern der Walzanlage und ein Rechensystem zum Betreiben einer Walzanlage zum Walzen eines Walzgutes bereitzustellen.

Die Aufgaben der Erfindung werden durch die unabhängigen Patentansprüche gelöst.

Es wird ein computerimplementiertes Verfahren zum Ermitteln eines Sollwertes eines Steuerparameters zum Steuern wenigstens eines Stellgliedes einer Walzanlage bereitgestellt. Dabei wird einem ersten Vorhersagemodell mindestens ein Sollwert für mindestens einen Steuerparameter zur Steuerung des Stellgliedes der Walzanlage zugeführt. Das erste Vorhersagemodell ermittelt anhand des Sollwertes des Steuerparameters einen ersten Erwartungswert für einen vorgegebenen technischen Parameter des Walzgutes nach dem Walzen mit dem Sollwert des Steuerparameters des Stellgliedes der Walzanlage. Zudem wird einem zweiten Vorhersagemodell mindestens ein adaptierter Sollwert des Steuerparameters zur Steuerung des Stellgliedes der Walzanlage zugeführt. Das zweite Vorhersagemodell ermittelt anhand des adaptierten Sollwertes des Steuerparameters einen zweiten Erwartungswert für den vorgegebenen technischen Parameter des Walzgutes nach dem Walzen mit dem adaptierten Sollwert des Steuerparameters des Stellgliedes der Walzanlage.

Der erste Erwartungswert und der zweite Erwartungswert werden mit einem Sollwert des technischen Parameters für das gewalzte Walzgut verglichen. Abhängig von dem Ergebnis des Vergleichs wird ein neuer adaptierter Sollwert des Steuerparameters des Stellgliedes in der Weise ermittelt, dass das zweite Vorhersagemodell mit dem neuen adaptierten Sollwert des Steuerparameters einen zweiten Erwartungswert ermittelt, der näher am Sollwert des technischen Parameters des gewalzten Walzgutes liegt als der vorhergehende zweite Erwartungswert, und wobei der neue adaptierte Sollwert des Steuerparameters für eine Steuerung und/oder Regelung des Stellgliedes der Walzanlage vorgesehen ist.

Durch den Vergleich des ersten Erwartungswertes und des zweiten Erwartungswert mit dem vorgegebenen Sollwert für den technischen Parameter des gewalzten Walzgutes wird überprüft, ob der Sollwert oder der adaptierte Sollwert zu einem besseren Erwartungswert führt. Der adaptierte Sollwert kann iterativ über mehrere Schritte so oft verändert werden, bis ein optimaler adaptierter Sollwert vorliegt.

Mithilfe dieses Verfahrens kann ein verbesserter Sollwert für den Steuerparameter zum Steuern des Stellgliedes der Walzanlage ermittelt werden. Ziel des beschriebenen Verfahrens ist es, den adaptierten Sollwert des Steuerparameters des Stellgliedes so zu verändern, dass das Walzgut nach dem Walzen wenigstens den vorgegebenen Sollwert des vorgegebenen technischen Parameters einhält oder wenigstens eine geringe Abweichung von dem vorgegebenen Sollwert des vorgegebenen technischen Parameters aufweist, und/oder die gewalzten Walzgüter mit größerer Stückzahl den vorgegebenen Sollwert des vorgegebenen technischen Parameters einhalten. Zudem kann das Ziel darin bestehen, dass die adaptierten Sollwerte der Steuerparameter der Stellglieder so verändert werden, dass das Walzgut nach dem Walzen mehrere vorgegebene Sollwerte von vorgegebenen technischen Parametern einhält oder wenigstens eine geringe Abweichung von den vorgegebenen Sollwerten der vorgegebenen technischen Parameter aufweist, und/oder die gewalzten Walzgüter mit größerer Stückzahl die vorgegebenen Sollwerte der vorgegebenen technischen Parameter einhalten.

Durch das erste und das zweite Vorhersagemodell und durch das verwendete Verfahren kann eine schrittweise Optimierung des adaptierten Sollwertes des wenigstens einen Steuerparameters des Stellgliedes erreicht werden. Das beschriebene Verfahren wird vorzugsweise so oft wiederholt, bis der oder die adaptierten Sollwerte wenigstens eine vorgegebene Bedingung erfüllen. Dadurch können optimierte Sollwerte für Steuerparameter für eine Steuerung und/oder eine Regelung des Stellgliedes der Walzanlage ermittelt werden, mit denen bereits vor dem Walzen eines Walzgutes die Steuerparameter der Stellglieder der Walzanlage in der Weise eingestellt werden können, so dass das Walzgut nach dem Walzen mit einer hohen Wahrscheinlichkeit den oder die Sollwerte der vorgegebenen technischen Parameter aufweist.

Beispielsweise werden das erste und das zweite Vorhersagemodell auf einer Steuerebene (Level 2 Ebene) durchgeführt, während der mithilfe des Verfahrens ermittelte adaptierte Sollwert des Steuerparameters für eine Regelung des Stellgliedes der Walzanlage (Level 1 Ebene) verwendet wird. Somit kann eine verbesserte Verbindung der Steuerebene mit der Regelebene erreicht werden.

Das Rechensystem kann eingesetzt werden, um eine Walzanlage in der Weise zu betreiben, dass die Wahrscheinlichkeit, dass ein Walzgut nach dem Walzen wenigstens einen gewünschten technischen Parameter, insbesondere eine gewünschte Qualität, aufweist, erhöht wird. Mithilfe des beschriebenen Verfahrens kann die Wahrscheinlichkeit erhöht werden, dass der gewünschte technische Parameter oder die gewünschte Qualität des gewalzten Walzgutes bereits zu Beginn des Betriebes der Walzanlage erreicht wird. Damit wird insgesamt die gewünschte Qualität der gewalzten Metallbänder erhöht.

Weitere Ausführungsformen des Verfahrens sind in den abhängigen Ansprüchen angegeben.

In einer Ausführungsform des Verfahrens wird der Sollwert des Steuerparameters des Stellgliedes, der dem ersten Vorhersagemodell zugeführt wird, mithilfe eines physikalischen Modells des Walzvorganges unter Berücksichtigung eines gewünschten Wertes eines technischen Parameters des gewalzten Walzgutes ermittelt. Insbesondere kann der Sollwert des Steuerparameters des Stellgliedes in einer Setup-Berechnung ermittelt werden. So kann bereits der Sollwert des Steuerparameters des Stellgliedes, der dem ersten Vorhersagemodell und/oder dem Optimierungsmodul zugeführt wird, einen optimierten Wert in Bezug auf einen gewünschten Wert des technischen Parameters des gewalzten Walzgutes aufweisen. Somit können bessere und/oder schneller bessere adaptierte Sollwerte des Steuerparameters für eine Steuerung und/oder Regelung des Stellgliedes der Walzanlage ermittelt werden, die zu einem gewalzten Walzgut mit dem gewünschten Sollwert des technischen Parameters oder dem gewünschten Sollwertbereich des technischen Parameters führen.

In einer weiteren Ausführungsform weist die Walzanlage weitere Stellglieder auf, die verwendet werden, um Betriebsparameter der Walzanlage einzustellen. Bei dieser Ausführungsform werden dem ersten Vorhersagemodell Sollwerte für Steuerparameter der weiteren Stellglieder der Walzanlage zugeführt. Das erste Vorhersagemodell ermittelt anhand der Sollwerte der Steuerparameter der weiteren Stellglieder einen ersten Erwartungswert für einen technischen Parameter des Walzgutes nach dem Walzen mit den Sollwerten der Steuerparameter der weiteren Stellglieder der Walzanlage. Dem zweiten Vorhersagemodell werden die adaptierten Sollwerte der Steuerparameter der weiteren Stellglieder zugeführt. Das zweite Vorhersagemodell ermittelt anhand der adaptierten Sollwerte der Steuerparameter der weiteren Stellglieder einen zweiten Erwartungswert für den technischen Parameter des Walzgutes nach dem Walzen mit den adaptierten Sollwerten der Steuerparameter der weiteren Stellglieder der Walzanlage.

Der erste Erwartungswert und der zweite Erwartungswert werden mit einem Sollwert des technischen Parameters für das gewalzte Walzgut verglichen. Abhängig von dem Ergebnis des Vergleichs werden neue adaptierte Sollwerte der Steuerparameter der weiteren Stellglieder in der Weise ermittelt, dass das zweite Vorhersagemodell mit den neuen adaptierten Sollwerten der Steuerparameter einen zweiten Erwartungswert ermittelt, der näher am Sollwert des technischen Parameters des gewalzten Walzgutes liegt als der vorhergehende zweite Erwartungswert, und wobei die neuen adaptierten Sollwerte des Steuerparameters für eine Steuerung und/oder Regelung des Stellgliedes der Walzanlage vorgesehen sind.
In einer weiteren Ausführung wird abhängig von dem Ergebnis des Vergleichs mithilfe eines trainierten neuronalen Netzes der neue adaptierte Sollwert für den Steuerparameter des Stellgliedes der Walzanlage ermittelt wird. Mithilfe des trainierten neuronalen Netzes kann schnell und zuverlässig ein optimierter neuer adaptierter Sollwert für den Steuerparameter des Stellgliedes der Walzanlage ermittelt werden.

In einer weiteren Ausführung wird das neuronale Netz abhängig von dem Ergebnis des Vergleichs in der Weise trainiert, dass der neue adaptierte Sollwert so ermittelt wird, dass der neue zweite Erwartungswert näher am Sollwert des technischen Parameters des gewalzten Walzgutes liegt als der vorhergehende zweite Erwartungswert.

In einer Ausführung wird abhängig von dem Ergebnis des Vergleichs des ersten und des zweiten Erwartungswertes mit dem Sollwert des technischen Parameters ein positiver Bewertungswert ermittelt wird, wenn der zweite Erwartungswert näher am Sollwert ist als der erste Erwartungswert, wobei abhängig von dem Ergebnis des Vergleichs mit dem Sollwert des technischen Parameters ein negativer Bewertungswert ermittelt wird, wenn der erste Erwartungswert näher am Sollwert ist als der zweite Erwartungswert, wobei der Bewertungswert verwendet wird, um das neuronale Netz dahingehend zu trainieren, dass der adaptierte Sollwert so ermittelt wird, dass der zweite Erwartungswert möglichst nahe an den Sollwert des technischen Parameters des gewalzten Walzgutes herankommt oder den Sollwert des technischen Parameters des gewalzten Walzgutes wenigstens erreicht.

Es wird ein computerimplementiertes Verfahren zum Betreiben einer Walzanlage zum Walzen eines Walzgutes vorgeschlagen. Dabei soll das Walzgut nach dem Walzen einen technischen Parameter mit einem vorgegebenen Wert aufweisen. Die Walzanlage weist wenigstens ein Stellglied auf, um einen Betriebsparameter der Walzanlage einzustellen. Es wird ein erstes Vorhersagemodell verwendet, das anhand eines Sollwertes des Steuerparameters des Stellgliedes einen ersten Erwartungswert für einen technischen Parameter des Walzgutes nach dem Walzen mit dem Sollwert des Steuerparameters des Stellgliedes der Walzanlageermittelt. Zudem ist ein zweites Vorhersagemodell vorgesehen, das anhand eines adaptierten Sollwertes des Steuerparameters einen zweiten Erwartungswert für den technischen Parameter des Walzgutes nach dem Walzen mit dem adaptierten Sollwert des Steuerparameters des Stellgliedes der Walzanlage ermittelt.

Der erste Erwartungswert und der zweite Erwartungswert werden mit einem Sollwert des technischen Parameters für das gewalzte Walzgut verglichen. Abhängig von dem Ergebnis des Vergleichs wird ein neuer adaptierter Sollwert des Steuerparameters des Stellgliedes in der Weise ermittelt, dass das zweite Vorhersagemodell mit dem neuen adaptierten Sollwert des Steuerparameters einen zweiten Erwartungswert ermittelt, der näher am Sollwert des technischen Parameters des gewalzten Walzgutes liegt als der vorhergehende zweite Erwartungswert, und wobei der neue adaptierte Sollwert des Steuerparameters für eine Steuerung und/oder Regelung des Stellgliedes der Walzanlage vorgesehen ist.
Dieses Verfahren kann so oft wiederholt werden, bis der adaptierte Sollwert eine vorgegebene Bedingung erfüllt. Das Stellglied der Walzanlage wird mit dem adaptierten Sollwert des Steuerparameters geregelt oder gesteuert. Dadurch wird ein verbessertes Betreiben der Walzanlage erreicht, da die Wahrscheinlichkeit höher ist, dass das Walzgut nach dem Walzen einen technischen Parameter aufweist, der dem vorgegebenen bzw. gewünschten Sollwert entspricht.

In einer weiteren Ausführungsform wird unter Verwendung des Sollwertes des Steuerparameters des Stellgliedes wiederholt ein adaptierter Sollwert des Steuerparameters des Stellgliedes ermittelt, bis der zweite Erwartungswert einen vorgegebenen Wert aufweist. Auf diese Weise wird eine weitere Verbesserung des Sollwertes des Steuerparameters erreicht. Abhängig von der gewählten Ausführungsform können zweite Erwartungswerte für mehrere technische Parameter des gewalzten Walzgutes ermittelt werden. Auf diese Weise kann eine Optimierung des oder der adaptierten Sollwerte unter Berücksichtigung verschiedener technischer Parameter des gewalzten Walzgutes erreicht werden.

Abhängig von der gewählten Ausführungsform können verschiedene Steuerparameter des Stellgliedes bei dem beschriebenen Verfahren als Sollwerte berücksichtigt werden. Dies betrifft historischen Trainingsdaten und/oder historische Testdaten und/oder aktuelle Steuerparameter der Walzanlage, mit denen ein Walzgut gewalzt wird. Beispielsweise kann der Steuerparameter eines Stellgliedes wenigstens einen Parameter aus der Gruppe aufweisen:
Abstand zweier gegenüberliegend angeordneter Arbeitswalzen eines Walzgerüstes der Walzanlage;
Kraft, mit der eine Arbeitswalze auf das zu walzende Walzgut gedrückt wird;
Position einer Walze eines Walzgerüstes entlang der Drehachse der Walze;
Drehgeschwindigkeit einer Arbeitswalze;
Heizleistung einer Heizung der Walzanlage;
Kühlleistung einer Kühlung der Walzanlage;
Geschwindigkeit des Walzgutes beim Walzen. Der Steuerparameter des Stellgliedes kann auch einen anderen Parameter darstellen.

In einer weiteren Ausführungsform sind das erste Vorhersagemodell und/oder das zweite Vorhersagemodell als trainierte neuronale Netze ausgebildet. Dabei wurden das erste und/oder das zweite Vorhersagemodell z.B. mithilfe von historischen Sollwerten der Steuerparameter der Stellglieder der Walzanlage, die beim Walzen von Walzgütern, insbesondere Metallbändern, verwendet wurden, und den anschließend gemessenen Werten der technischen Parameter der gewalzten Walzgüter mithilfe eines überwachten Lernverfahrens mit historischen Trainingsdaten trainiert.

Auf diese Weise kann mithilfe der Vorhersagemodelle, die historische Sollwerte von Steuerparametern von Stellgliedern von Walzverfahren bereits gewalzter Walzgüter und technische Parameter der gewalzten Walzgüter berücksichtigen, ein optimierter Steuerparameter offline, d.h. ohne tatsächliches Walzen eines Walzgutes, ermittelt werden. Zudem kann das beschriebene Verfahren auch online während des Betriebes einer Walzanlage eingesetzt werden. Dabei können zusätzlich anstelle der historischen Sollwerte der Steuerparameter der Stellglieder der Walzanlage und der historischen technischen Parameter der gewalzten Walzgüter auch aktuelle Sollwerte der Steuerparameter der Stellglieder der Walzahnlage und die gemessenen technischen Parameter der von der Walzanlage mit den aktuellen Sollwerten der Steuerparameter der Stellglieder gewalzten Walzgüter verwendet werden, um das erste und/oder zweite Vorhersagemodell an die tatsächlichen und aktuellen Gegebenheiten des Betreibens der Walzanlage anzupassen.

Das überwachte Training des ersten und/oder des zweiten Vorhersagemodells wurde in der Weise durchgeführt, dass unter Vorgabe eines Sollwertes für einen Steuerparameter des Stellgliedes das erste und/oder das zweite Vorhersagemodell mit einer Wahrscheinlichkeit von beispielsweise 80% oder 90 % einen ersten Erwartungswert bzw. einen zweiten Erwartungswert für einen technischen Parameter des Walzgutes nach dem Walzen des Walzgutes vorhersagen können.

In einer weiteren Ausführungsform sind das erste und das zweite Vorhersagemodell identisch ausgebildet und/oder wurden identisch trainiert. Auf diese Weise wird ein einfaches Verfahren bereitgestellt. Zudem wird Trainingsaufwand eingespart. Weiterhin kann die Funktion des zweiten Vorhersagemodells auch von dem ersten Vorhersagemodell übernommen werden. Somit kann auch nur ein Vorhersagemodell verwendet werden, das den ersten und den zweiten Erwartungswert vorhersagt. Somit wird der erste und der zweite Erwartungswert jeweils von einem Vorhersagemodell aufgrund des Sollwertes und des adaptierten Sollwertes ermittelt.
Es wird ein computerimplementiertes Verfahren zum Trainieren eines Optimierungsmoduls vorgeschlagen. Das Optimierungsmodul weist ein neuronales Netz auf. Das Optimierungsmodul ist vorgesehen, um abhängig von wenigstens einem Sollwert eines Steuerparameters eines Stellgliedes einer Walzanlage einen adaptierten Sollwert zum Steuern des Stellgliedes der Walzanlage zu ermitteln. Es ist ein erstes Vorhersagemodell vorgesehen. Dem Optimierungsmodul und dem ersten Vorhersagemodell werden erste Trainingsdaten zugeführt, wobei die ersten Trainingsdaten wenigstens einen historischen Sollwert eines Steuerparameters eines Stellgliedes einer Walzanlage aufweisen, mit denen ein Walzgut in einer Walzanlage gewalzt wurde. Die ersten Trainingsdaten können zudem technische Parameter des Walzgutes vor dem Walzen und technische Parameter des Walzgutes nach dem Walzen aufweisen. Das Optimierungsmodul ermittelt abhängig von einem Bewertungswert und abhängig von dem Sollwert des Steuerparameters des Stellgliedes der ersten Trainingsdaten einen adaptierten Sollwert des Steuerparameters des Stellgliedes.
Das erste Vorhersagemodell ermittelt anhand der ersten Trainingsdaten einen ersten Erwartungswert für wenigstens einen technischen Parameter des Walzgutes, unter der Annahme, dass das Walzgut mit dem Sollwert des Steuerparameters des Stellgliedes gewalzt wird. Das erste Vorhersagemodell oder ein zweites Vorhersagemodell ermitteln anhand des adaptierten Sollwertes des Steuerparameters des Stellgliedes der Walzanlage einen zweiten Erwartungswert für den wenigstens einen technischen Parameter des Walzgutes nach dem Walzen unter der Annahme, dass das Walzgut mit dem adaptierten Sollwert des Steuerparameters des Stellgliedes der Walzanlage gewalzt wird. Der erste Erwartungswert und der zweite Erwartungswert werden mit einem vorgegebenen Sollwert des technischen Parameters für das gewalzte Walzgut verglichen. Abhängig von dem Ergebnis des Vergleichs wird ein Bewertungswert ermittelt, wobei der Bewertungswert dem Optimierungsmodul zugeführt wird. Dem Optimierungsmodul und dem ersten Vorhersagemodell werden zweite historische Trainingsdaten zugeführt, wobei die zweiten Trainingsdaten wenigstens einen Sollwert wenigstens eines Steuerparameters eines Stellgliedes der Walzanlage aufweisen, mit denen ein zweites Walzgut in der Walzanlage gewalzt wurde. Die zweiten Trainingsdaten können auch technische Parameter des zweiten Walzgutes vor dem Walzen und technische Parameter des zweiten Walzgutes nach dem Walzen aufweisen. Das Optimierungsmodul ermittelt abhängig von dem Bewertungswert, der anhand der ersten Trainingsdaten ermittelt wurde, und abhängig von dem Sollwert des Steuerparameters des Stellgliedes der zweiten Trainingsdaten einen adaptierten Sollwert des Steuerparameters des Stellgliedes. Das erste Vorhersagemodell ermittelt anhand der zweiten Trainingsdaten einen ersten Erwartungswert für wenigstens einen technischen Parameter des zweiten Walzgutes unter der Annahme, dass das zweite Walzgut mit dem Sollwert des Steuerparameters des Stellgliedes der zweiten Trainingsdaten gewalzt wird. Das erste Vorhersagemodell oder ein zweites Vorhersagemodell ermittelt anhand des adaptierten Sollwertes des Optimierungsmoduls und anhand der zweiten Trainingsdaten einen zweiten Erwartungswert für den wenigstens einen technischen Parameter des zweiten Walzgutes nach dem Walzen unter der Annahme, dass das zweite Walzgut mit dem adaptierten Sollwert des Steuerparameters des Stellgliedes der Walzanlage gewalzt wird. Der erste Erwartungswert und der zweite Erwartungswert, die mit den zweiten Trainingsdaten ermittelt wurden, werden mit dem vorgegebenen Sollwert des technischen Parameters für das gewalzte zweite Walzgut verglichen. Abhängig von dem Ergebnis des Vergleichs wird ein zweiter Bewertungswert ermittelt, wobei der zweite Bewertungswert dem Optimierungsmodul zugeführt wird. Der zweite Bewertungswert wird für einen nächsten Verfahrensschritt mit dritten Testdaten vom Optimierungsmodul verwendet. Das Verfahren wird vorzugsweise für eine vorgegebene Anzahl von weiteren Trainingsdaten wiederholt, wobei vorzugsweise anschließend eine Qualität des Optimierungsmoduls überprüft wird. Das Verfahren wird mit einer weiteren vorgegebenen Anzahl von Trainingsdaten wiederholt, wenn das Optimierungsmodul nicht die vorgegebene Qualität aufweist. Das Verfahren wird beendet, wenn das Optimierungsmodul die vorgegebene Qualität aufweist. Anschließend wird der adaptierte Sollwert des Steuerparameters des Stellgliedes der Walzanlage, der vom Optimierungsmodul ermittelt wurde, für eine Steuerung und/oder Regelung der Walzanlage vorgesehen.

In einer Ausführung wird das neuronale Netz des Optimierungsmoduls abhängig von dem Ergebnis des Vergleichs in der Weise trainiert, dass der neue adaptierte Sollwert des Steuerparameters des Stellgliedes der Walzanlage, der anhand der n-ten Trainingsdaten beim n-ten Durchlauf des Verfahrens ermittelt wurde, so ermittelt wird, dass der neue zweite Erwartungswert, der mithilfe der n-ten Trainingsdaten und dem neuen adaptiven Sollwert ermittelt wird, näher am vorgegebenen Sollwert des technischen Parameters des gewalzten Walzgutes liegt als der vorhergehende zweite Erwartungswert, der anhand der (n-1)-ten Trainingsdaten beim (n-1)-ten Durchlauf des Verfahrens ermittelt wurde.

In einer weiteren Ausführungsform des Verfahrens stellt der technische Parameter des gewalzten Walzgutes und/oder der technische Parameter des Walzgutes vor dem Walzen der Trainingsdaten und/oder der Testdaten und/oder der aktuell von der Walzanlage gewalzten Walzgüter beispielsweise einen Parameter aus der folgenden Gruppe dar:
Breite, Höhe und/oder Länge des Walzgutes;
Legierungszusammensetzung des Walzgutes;
Kontur des Querschnittes des Walzgutes;
Temperatur des Walzgutes direkt nach dem Verlassen des Walzgerüstes;
Temperatur des gewalzten Walzgutes nach einem Aufwickeln des Walzgutes auf eine Rolle bestimmter Größe. Der technische Parameter kann auch einen anderen Parameter des gewalzten Walzgutes darstellen.

In einer Ausführung wird dem zweiten Vorhersagemodell ein Sollwert eines Steuerparameters eines weiteren Stellgliedes der Walzanlage zugeführt, wobei das zweite Vorhersagemodell anhand des Sollwertes des Steuerparameters des weiteren Stellgliedes der Walzanlage einen zweiten Erwartungswert für den technischen Parameter des Walzgut nach dem Walzen mit den Sollwerten der Steuerparameter der weiteren Stellglieder der Walzanlage ermittelt.

In einer Ausführung werden unter Verwendung des Sollwertes des weiteren Steuerparameters des Stellgliedes und/oder unter Verwendung des Sollwertes des Steuerparameters des weiteren Stellgliedes der Walzanlage der adaptierte Sollwert des Steuerparameters des Stellgliedes und/oder der adaptierte Sollwert des weiteren Steuerparameters des Stellgliedes und/oder der adaptierte Sollwert des Steuerparameters des weiteren Stellgliedes der Walzanlage ermittelt und dem zweiten Vorhersagemodell zugeführt, und wobei der adaptierte Sollwert des Steuerparameters des Stellgliedes und/oder der adaptierte Sollwert des weiteren Steuerparameters des Stellgliedes und/oder der adaptierte Sollwert des Steuerparameters des weiteren Stellgliedes für eine Steuerung und/oder Regelung des Stellgliedes und/oder der weiteren Stellglieder der Walzanlage vorgesehen sind.

In einer Ausführung ermittelt das erste Vorhersagemodell einen dritten Erwartungswert für einen weiteren technischen Parameter des Walzgutes nach dem Walzen, wobei das zweite Vorhersagemodell einen vierten Erwartungswert für den weiteren technischen Parameter des Walzgutes nach dem Walzen ermittelt, wobei der dritte Erwartungswert und der vierte Erwartungswert mit einem Sollwert des weiteren technischen Parameters für das gewalzte Walzgut verglichen werden, und wobei abhängig von dem Ergebnis des Vergleichs ein neuer adaptierter Sollwert des Steuerparameters des Stellgliedes in der Weise ermittelt wird, dass das zweite Vorhersagemodell mit dem neuen adaptierten Sollwert des Steuerparameters einen vierten Erwartungswert ermittelt, der näher am Sollwert des weiteren technischen Parameters des gewalzten Walzgutes liegt als der vorhergehende vierte Erwartungswert. Der neue adaptierte Sollwert des Steuerparameters ist für eine Steuerung und/oder Regelung des Stellgliedes der Walzanlage vorgesehen.

Es wird ein Verfahren zum Betreiben einer Walzanlage zum Walzen eines Walzgutes vorgeschlagen, wobei das Walzgut nach dem Walzen einen vorgegebenen Wert mindestens eines vorgegebenen technischen Parameters aufweisen soll. Beim Betreiben der Walzanlage wird über wenigstens ein Stellglied der Walzanlage wenigstens ein Betriebsparameter der Walzanlage eingestellt. Es wird unter Verwendung eines Sollwertes für den Steuerparameter des Stellgliedes mindestens ein adaptierter Sollwert des Steuerparameters für die Steuerung des Stellgliedes der Walzanlage ermittelt. Der adaptierte Sollwert des Steuerparameters wird ausgegeben, um das Stellglied der Walzanlage zu steuern. Der adaptierte Sollwert wurde nach dem Verfahren gemäß Anspruch 1 ermittelt.

Weiterhin wird ein Rechensystem mit einer Schnittstelle zum Empfangen und zum Ausgeben von Daten vorgeschlagen, wobei das Rechensystem ausgebildet ist, ein Verfahren nach einem der Ansprüche 1 bis 16 auszuführen.

Zudem wird ein Computerprogramm vorgeschlagen, das Befehle umfasst, die bei der Ausführung des Programms durch ein Rechensystem dieses veranlassen, ein Verfahren nach einem der Ansprüche 1 bis 16 auszuführen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: einen schematischen Aufbau einer Walzanlage;
- FIG 2: einen Querschnitt durch das Walzgut senkrecht zur Walzrichtung x in einer Bandbreitenrichtung z;
- FIG 3: eine schematische Darstellung eines Verfahrens zum Trainieren eines Vorhersagemodells;
- Fig. 4: eine schematische Darstellung eines Verfahrens zum Trainieren eines Steuermodels;
- Fig. 5: eine schematische Darstellung eines Verfahrens zum Steuern einer Walzanlage; und
- Fig. 6: ein weiteres Verfahren zum Steuern einer Walzanlage, wobei ein Online-Training des Optimierungsmoduls möglich ist,
darstellt.

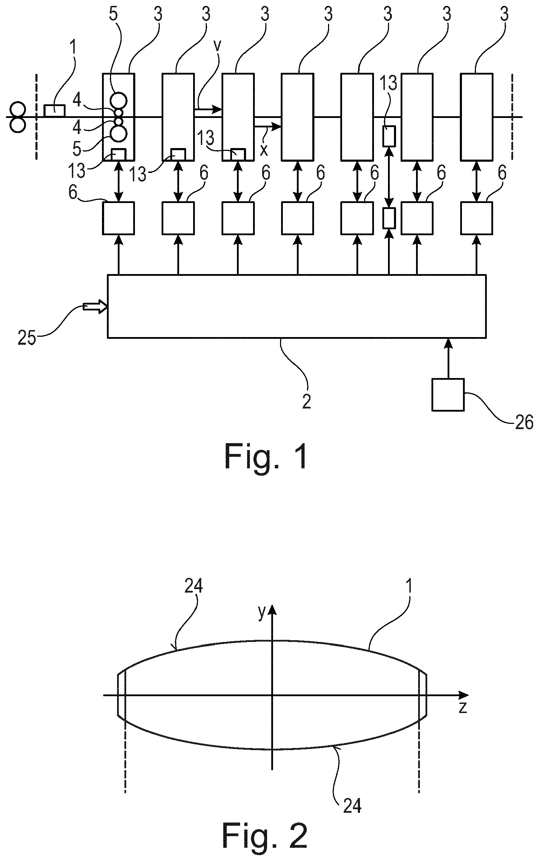

FIG 1 zeigt in einer schematischen Darstellung eine Walzanlage zum Walzen eines Walzgutes 1, die von einem Rechensystem 2 gesteuert wird. Das Walzgut kann beispielsweise eine Bramme oder ein Metallband darstellen. Die Betriebsweise des Rechensystems 2 wird von einem Computerprogramm festgelegt, das in einem Datenspeicher 26 des Rechensystems 2 abgelegt ist. Die beispielhaft dargestellte Walzanlage weist sieben Walzgerüste 3 auf. Abhängig von der gewählten Ausführungsform kann die Walzanlage auch nur ein Walzgerüst oder mehr als sieben Walzgerüste 3 aufweisen. Das Walzgut 1 wird in der Walzanlage in einer Walzrichtung x gewalzt. Die Walzanlage ist als Fertigstraße zum Warmwalzen von beispielsweise Stahlband ausgebildet. Die Walzanlage ist aber nicht auf die Anwendung bei einer Fertigstraße zum Warmwalzen von Stahlband beschränkt. Die Walzanlage kann auch als Kaltwalzanlage (Tandemstraße) ausgebildet sein und/oder nur ein Walzgerüst (z. B. ein Reversiergerüst) aufweisen und/oder zum Walzen eines Nichteisenmetalls (z. B. Aluminium, Kupfer oder ein anderes Bundmetall) ausgebildet sein.

Ein Walzgerüst 3 weist zumindest zwei gegenüberliegende Arbeitswalzen 4 und in der Regel auch für jede Arbeitswalze 4 eine Stützwalze 5 auf. Abhängig von der gewählten Ausführungsform können auch mehr Walzen bei einem Walzgerüst 3 vorgesehen sein, beispielsweise axial verschiebbare Zwischenwalzen. Vom Rechensystem 2 werden Regler 6 mit Sollwerten für Steuerparameter für Stellglieder 13 der Walzanlage zugeführt. Die Stellglieder 13 können z.B. als Profil- und Planheitsstellglieder, Heizeinrichtungen oder Kühleinrichtungen usw. ausgebildet sein. Die Regler 6 stellen die Stellglieder 13 dann entsprechend den vorgegebenen Sollwerten ein. Beispielsweise kann ein Regler 6 auch für die Steuerung und/oder Regelung einer Heizleistung einer Heizung der Walzanlage, einer Kühlleistung einer Kühlung der Walzanlage, für die Steuerung einer Geschwindigkeit des Walzgutes beim Walzen, für die Einstellung eines Abstands zweier gegenüberliegender Arbeitswalzen 4 eines Walzgerüstes 3, und/oder mit einem Aktor als Stellglied 13 zur Beaufschlagung der gegenüberliegenden Arbeitswalzen 4 mit einer vorgegebenen Kraft, mit der die Arbeitswalze auf das zu walzende Walzgut gedrückt wird, ausgebildet sein. Mithilfe der Sollwerte werden die Stellglieder 13 der Walzanlage entsprechend von den Reglern 6 gesteuert bzw. geregelt. Beispielsweise kann durch die Sollwerte des Steuerparameters des Stellgliedes 13 ein auslaufseitiger Walzspaltverlauf des Walzgerüstes 3 beeinflusst werden, der sich zwischen den gegenüberliegenden Arbeitswalzen 4 des Walzgerüstes 3 einstellt. Der auslaufseitige Walzspaltverlauf korrespondiert mit einem auslaufseitigen Konturverlauf des Walzgutes 1. Die Sollwerte für die Steuerparameter der Stellglieder des Walzgerüstes 3 werden z.B. in der Weise festgelegt, dass sich der gewünschte Walzspaltverlauf ergibt bzw. das Walzgut 1 einen gewünschten Wert wenigstens eines technischen Parameters nach dem Walzen aufweist.

Dem Rechensystem 2 werden beispielsweise Stichplandaten, wie eine Eingangsdicke des Walzgutes 1 sowie für jedes Walzgerüst 3 eine Walzkraft FW und eine Stichabnahme r zugeführt. Zudem können dem Rechensystem 2 auch eine Solldicke, ein Sollprofilwert, ein Sollendkonturverlauf und ein Sollplanheitsverlauf für das Walzgut nach dem Walzen durch wenigstens ein Walzgerüst zugeführt werden. Diese Daten können beispielsweise aus dem Datenspeicher 26 ausgelesen oder über eine Datenschnittstelle 25 vom Rechensystem 2 eingelesen werden. Das Rechensystem 2 steuert die Walzanlage in der Weise an, dass das Walzgut 1 nach dem Walzen mit wenigstens einem Walzgerüst wenigstens einen oder mehrere technische Parameter aufweisen, die vorgegebene Sollwerte oder Sollwertebereiche erfüllen.

Die technischen Parameter der historischen Trainingsdaten und/oder historische Testdaten der Walzgüter vor dem Walzen und/oder der gewalzten Walzgüter und/oder des aktuell von der Walzanlage gewalzten Walzgutes können beispielsweise einen Parameter aus der folgenden Gruppe aufweisen:
Breite, Höhe und/oder Länge des Walzgutes vor und/oder nach dem Walzen;
Legierungszusammensetzung des Walzgutes;
Kontur des Querschnittes des Walzgutes vor und/oder nach dem Walzen;
Temperatur des Walzgutes nach dem Verlassen des letzten Walzgerüstes;
Temperatur des gewalzten Walzgutes nach einem Aufwickeln des Walzgutes in Form einer Rolle;
vorgegebene Planheit des gewalzten Walzgutes.

Figur 2 zeigt einen Querschnitt durch ein Beispiel eines Walzgutes senkrecht zur Walzrichtung x in einer Bandbreitenrichtung z. Die Dicke des Walzgutes 1 in der y-Richtung variiert entlang der Bandbreitenrichtung z. Somit weist das Walzgut in der Ebene der Bandbreitenrichtung z eine Oberseite und eine Unterseite auf, die jeweils einen Konturverlauf 24 aufweist. Zudem sollte ein gewalztes Walzgut nach dem Walzen im Idealfall eine absolut plane Oberseite und eine absolut plane Unterseite in Längs- und/oder in Querrichtung aufweisen. Die Planheit der Oberseite und/oder der Unterseite des gewalzten Walzgutes kann mithilfe eines Planheitsverlaufes beschrieben werden. Die Sollwalzspaltverläufe der Walzgerüste 3 sollen möglichst derart festgelegt werden, dass das Walzgut 1 wenigstens einen oder mehrere Sollwerte der gewünschten technischen Parameter erreicht.

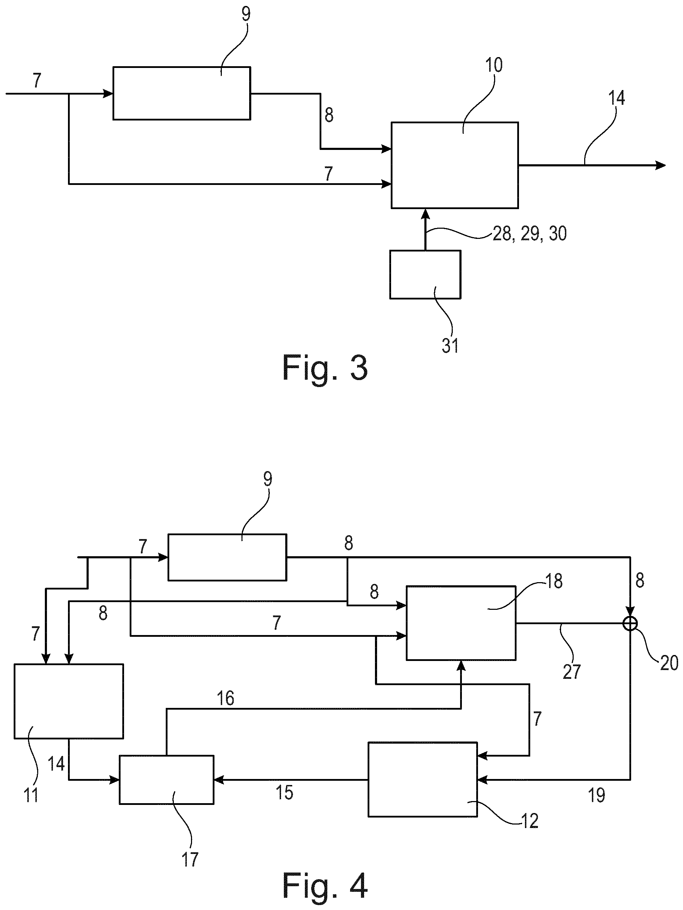

Figur 3 zeigt in einer schematischen Darstellung eine Vorrichtung und ein Verfahren, mit dem ein Vorhersagemodell 10 zur Vorhersage eines Erwartungswertes 14 für einen technischen Parameter des Walzgutes nach dem Walzen trainiert werden kann. Die Vorrichtung kann z.B. in Form einer oder mehrerer Recheneinheiten ausgebildet sein. Das Vorhersagemodell 10 ist z.B. als trainiertes neuronales Netz ausgebildet. Zum Training des Vorhersagemodells 10 werden dem Vorhersagemodell 10 Sollwerte 7 und/oder berechnete Sollwerte 8 wenigstens eines Steuerparameters wenigstens eines Stellgliedes der Walzanlage zugeführt, mit denen ein Walzgut gewalzt wurde. Zudem werden dem Vorhersagemodell 10 wenigstens eine, insbesondere mehrere technische Parameter 28 des Walzgutes vor dem Walzen und/oder technische Parameter 29 des gewalzten Walzgutes nach dem Walzen zugeführt. Die technischen Parameter 28 des Walzgutes vor dem Walzen und die technischen Parameter 29 des gewalzten Walzgutes sind in einem weiteren Datenspeicher 31 der Recheneinheit abgelegt. Mit einer Vielzahl dieser historischen Daten von gewalzten Walzgütern der Trainingsdaten wird das Vorhersagemodell 10 in der Weise trainiert, um anhand von technischen Parametern des Walzgutes vor dem Walzen und/oder anhand von Sollwerten 7 und/oder berechneten Sollwerte 8 wenigstens eines Steuerparameters wenigstens eines Stellgliedes der Walzanlage einen Erwartungswert für einen technischen Parameter des Walzgutes nach dem Walzen mit dem Sollwert des Steuerparameters des Stellgliedes der Walzanlage vorherzusagen.

Die Sollwerte 7,8 und die berechneten Sollwerte 8 und die technischen Parameter 28, 29 der Walzgüter vor dem Walzen und nach dem Walzen sind z.B. historische Trainingsdaten, mit denen Walzgüter gewalzt wurden. Somit kennt das Vorhersagemodell die Sollwerte der Steuerparameter der Stellglieder der Walzanlage, mit denen die Walzgüter gewalzt wurden, und gleichzeitig die Werte technischer Parameter der Walzgüter vor dem Walzen und die gemessenen Werte technischer Parameter der gewalzten Walzgüter nach dem Walzen.

Das Vorhersagemodell 10 wird mit einer Vielzahl von Beispielen von in der Vergangenheit gewalzten Walzgütern trainiert, um abhängig von wenigstens einem Sollwert für ein Stellglied der Walzanlage beim Walzen und vorzugsweise von technischen Parametern des Walzgutes vor dem Walzen einen Erwartungswert für einen technischen Parameter des zu walzenden Walzgutes nach dem Walzen vorherzusagen. Die Vielzahl der Beispiele von in der Vergangenheit gewalzten Walzgütern ermöglicht ein überwachtes Lernen während des Trainings des Vorhersagemodells 10.

Beispielsweise kann das Vorhersagemodell 10 in Form eines neuronalen Netzes ausgebildet sein, das anhand der Sollwerte der Steuerparameter der Stellglieder der Walzanlage und der mit diesen Sollwerten gewalzten Metallbänder und vorzugsweise deren gemessenen Werte der technischen Parameter der historische Trainingsdaten vor und/oder nach dem Walzen und/oder aktueller Daten vor und/oder nach dem Walzen in der Weise trainiert wird, dass abhängig von wenigstens einem Sollwert für einen Steuerparameter zur Steuerung des Stellgliedes der Walzanlage und abhängig von einem Wert für wenigstens einen technischen Parameter des Walzgutes vor Walzvorgang einen Erwartungswert 14 für wenigstens einen technischen Parameter des gewalzten Walzgutes ermittelt wird. Zudem können beim Training des Vorhersagemodells 10 Sollwerte von weiteren Steuerparametern der Stellglieder der Walzanlage, die den Walzprozess des Walzgutes beeinflussen, zugeführt und damit berücksichtigt werden.

Das Vorhersagemodell 10 kann anhand der Sollwerte der Steuerparameter der Stellglieder der Walzanlage und der mit diesen Sollwerten gewalzten Metallbänder und deren gemessenen Werte der technischen Parameter der historische Trainingsdaten vor und/oder nach dem Walzen und/oder aktueller Daten vor und/oder nach dem Walzen in der Weise trainiert werden, dass abhängig von Sollwerten für Steuerparameter zur Steuerung mehrerer Stellgliedes der Walzanlage und/oder abhängig von Sollwerten für mehrere technische Parameter des Walzgutes vor dem Walzvorgang einen Erwartungswert 14 für wenigstens einen technischen Parameter des gewalzten Walzgutes ermittelt werden.

Zum Trainieren des Vorhersagemodells werden z.B. Sollwerte 7, 8 von folgenden Steuerparametern von Stellglieder der Walzanlage der historischen Trainingsdaten verwendet:
- Abstand zweier gegenüberliegend angeordneter Arbeitswalzen eines Walzgerüstes der Walzanlage;
- Kraft, mit der eine Arbeitswalze auf das zu walzende Walzgut gedrückt wird;
- Position einer Walze eines Walzgerüstes entlang der Drehachse der Walze;
- Drehgeschwindigkeit einer Arbeitswalze;
- Heizleistung einer Heizung der Walzanlage;
- Kühlleistung einer Kühlung der Walzanlage;
- Geschwindigkeit des Walzgutes beim Walzen;
- Abstand wann das letzte Band gewalzt wurde;
- Soll-Dicke des gewalzten Walzgutes;
- Soll-Profil des gewalzten Walzgutes;
- Soll-Breite des gewalzten Walzgutes;
- Soll-Planheit des gewalzten Walzgutes;
- Soll-Kontur des gewalzten Walzgutes etc.

In einer einfachen Ausführungsform können auch Erwartungswerte für mehrere technische Parameter für das Training des Vorhersagemodells 10 verwendet werden.

Die Sollwerte 7 können abhängig von der gewählten Ausführungsform von einem Sollwert-Berechnungsblock 9 unter Verwendung eines physikalischen Modells des Walzvorganges wenigstens teilweise in berechnete Sollwerte 8 umgewandelt werden.

Die Sollwerte 7 und die berechneten Sollwerte 8 der historischen Trainingsdaten, der Testdaten und/oder der aktuell betriebenen Walzanlage können z.B. folgende Parameter betreffen:
- Gerüstanstellung für jedes Gerüst, d.h. eine Dicke des Walzspaltes;
- Biegekräfte in den Gerüsten zwischen den Arbeitswalzen eines Gerüstes;
- Schiebeposition der Arbeitswalzen in den Gerüsten;
   - Diverse Sensitivitäten, die Auswirkung auf die Regelgrößen abbilden bei sich ändernden Walzbedingungen;
   - Abstand zweier gegenüberliegend angeordneter Arbeitswalzen eines Walzgerüstes der Walzanlage;
   - Kraft, mit der eine Arbeitswalze auf das zu walzende Walzgut gedrückt wird;
   - Position einer Walze eines Walzgerüstes entlang der Drehachse der Walze;
   - Drehgeschwindigkeit einer Arbeitswalze;
   - Heizleistung einer Heizung der Walzanlage;
   - Kühlleistung einer Kühlung der Walzanlage;
   - Geschwindigkeit des Walzgutes beim Walzen;
   - Abstand wann das letzte Band gewalzt wurde;
   - Soll-Dicke des gewalzten Walzgutes;
   - Soll-Profil des gewalzten Walzgutes;
   - Soll-Breite des gewalzten Walzgutes;
   - Soll-Planheit des gewalzten Walzgutes;
   - Soll-Kontur des gewalzten Walzgutes etc.

Die Sollwerte 7 und die berechneten Sollwerte 8 können Sollwerte für Steuerparameter der Stellglieder der Walzanlage und technische Parameter des Walzgutes vor dem Walzen darstellen. Beispielsweise kann das physikalische Modell des Sollwert-Berechnungsblockes 9 ein Arbeitswalzenabplattungsmodell, ein Walzenbiegemodell, ein Walzentemperaturmodell und ein Walzenverschleißmodell, sowie einen Sollwertermittler aufweisen. Das Arbeitswalzenabplattungsmodell, das Walzenbiegemodell und das Walzentemperaturmodell und das Walzenverschleißmodell bilden zusammen ein Walzenverformungsmodell. Zudem kann das physikalische Modell auch ein Konturermittlungs- und ein Bandverformungsmodell aufweisen. Somit kann eine Abschätzung des erwarteten Planheitsverlaufs in der Bandbreitenrichtung z am Auslauf des jeweiligen Walzgerüstes 3 ermittelt werden.

Zudem können das physikalische Modell auch einen Konturermittlungs- und ein Bandverformungsmodell aufweisen. Beispielsweise können die Sollwerte 7 und die berechneten Sollwerte 8 als technische Parameter des Walzgutes vor dem Walzen eine Bandbreite des Walzgutes, eine Banddicke des Walzgutes, eine Legierungszusammensetzung des Walzgutes, eine Temperatur des Walzgutes vor dem Walzen, eine Geschwindigkeit des Walzgutes vor dem Walzen aufweisen. Weiterhin können die Sollwerte 7 einen Eingangsbandzug vor und einen Ausgangsbandzug nach dem jeweiligen Walzgerüst 3, die Radien der Arbeitswalzen 4 und ein Elastizitätsmodul der Arbeitswalzen 4, die Walzkraft und die Stichabnahme, sowie Reibungskoeffizienten aufweisen.

Das physikalische Modell kann somit eine Abschätzung des erwarteten Planheitsverlaufs in der Bandbreitenrichtung z am Auslauf des jeweiligen Walzgerüstes 3 ermitteln. Zudem kann das physikalische Modell, d.h. der Sollwert-Berechnungsblock 9 die Sollwerte der Steuerparameter der Stellglieder der Walzanlage in der Weise anpassen, dass ein gewünschter Sollwert des technischen Parameters des Walzgutes nach dem Walzen des Walzgutes erhalten wird. Abhängig von der gewählten Ausführungsform kann auch auf den Sollwert-Berechnungsblock 9 verzichtet werden.

Mithilfe des in Figur 3 dargestellten Verfahrens kann ein Vorhersagemodell 10 mithilfe eines überwachten maschinellen Lernens trainiert werden, das abhängig von Sollwerten für Steuerparameter der Stellglieder der Walzanlage und Werten von technischen Parametern des Walzgutes vor dem Walzen einen Erwartungswert für wenigstens einen technischen Parameter des gewalzten Walzgutes ermitteln.

Mit dem beschriebenen Verfahren können ein erstes und ein zweites Vorhersagemodell trainiert werden. Das erste und das zweite Vorhersagemodell können identisch ausgebildet sein oder sich im Aufbau unterscheiden, insbesondere können das erste und das zweite Vorhersagemodell identische neuronale Netze oder verschiedene neuronale Netze aufweisen und/oder die neuronalen Netze können mit verschiedenen Trainingsdaten trainiert werden.

Figur 4 zeigt in einer schematischen Darstellung ein computerimplementiertes Verfahren mit einem Optimierungsmodul 18 zum Ermitteln wenigstens eines verbesserten adaptierten Sollwertes eines Steuerparameters zum Steuern eines Stellgliedes der Walzanlage in der Weise, dass das Walzgut nach dem Walzen mit dem verbesserten Sollwert mit größerer Wahrscheinlichkeit wenigstens einen technischen Parameter mit einem gewünschten Sollwert aufweist. Das Optimierungsmodul 18 ist z.B. als neuronales Netz ausgebildet.

Es ist ein erstes Vorhersagemodell 11 vorgesehen, dem Sollwerte 7 und/oder berechnete Sollwerte 8 für Steuerparameter von Steuergliedern der Walzanlage zugeführt werden. Das erste und das zweite Vorhersagemodell 11, 12 sind gemäß dem Verfahren der Figur 3 trainiert worden. Die berechneten Sollwerte 8 werden, wie bereits zu Figur 3 erläutert, z.B. mithilfe des Sollwert-Berechnungsblocks 9 erstellt.

Aufgrund von vorgegebenen Sollwerten wie beispielsweise Soll-Dicke und/oder Soll-Breite und/oder Soll-Profil und/oder Soll-Planheit und/oder Soll-Kontur des gewalzten Walzgutes, Materialeigenschaften des Walzgutes, Endwalztemperatur, etc. berechnet der Sollwert-Berechnungsblock 9 vorzugsweise auf einem sogenannten Level 2 die Arbeitspunkte des Walzwerks, d.h. die berechneten Sollwerte 8 für die Steuerglieder der Walzanlage (Setup-Werte) wie z.B. Walzgeschwindigkeit, Durchbiegung der Walzen, Position der Walze entlang der Drehachse der Walze Verkippung der Walze gegenüber einer parallelen Ausrichtung gegenüber einer Mittenebene des Walzgutes, Kühlung der Walze, Einstellung der Kühlleistung der Kühlstrecke, Wassermenge entlang der Kühlstrecke usw.

Es kann jedoch auch auf den Sollwert-Berechnungsblock 9 verzichtet werden. Bei dieser Ausführung werden die berechneten Sollwerte 8 und/oder die Sollwerte 7 von einer Steuerung bereitgestellt oder aus einer Datenbank ausgelesen.

Das erste und das zweite Vorhersagemodell 11,12, die jeweils ein neuronales Netz aufweisen, erhalten als Input die Sollwerte 7 und/oder die berechneten Sollwerte 8 (Setupwerte) und geben als Output Erwartungswerte für wenigstens einen technischen Parameter des gewalzten Walzgutes unter der Annahme aus, dass das Walzgut mit den Sollwerten 7 und/oder den berechneten Sollwerte 8 gewalzt wird.

Zum Trainieren des ersten und/oder des zweiten Vorhersagemodells 11, 12 werden, wie bereits beim Vorhersagemodell der FIG 3 ausgeführt, historische Trainingsdaten von gewalzten Walzgütern verwendet. Die historischen Trainingsdaten umfassen sowohl Sollwerte der Steuerparameter, die beim Walzen der Walzgüter verwendet wurden, als auch die gemessenen Werte der technischen Parameter der Walzgüter vor dem Walzen und/oder der gewalzten Walzgüter nach dem Walzen. Die neuronalen Netze 11, 12 können somit überwacht trainiert werden. In einem Trainingsschritt werden dem jeweiligen neuronalen Netz 11, 12 als Input die Sollwerte 7 und die berechneten Sollwerte 8 (Setupwerte) eines gewalzten Walzgutes übergeben und als zu erwartender Output der neuronalen Netze die gemessenen technischen Parameter des gewalzten Walzgutes zugeführt. Nun werden die von den neuronalen Netzen ermittelten Ausgangsdaten mit den gemessenen technischen Parametern verglichen. Aus den Abweichungen werden beispielsweise durch Backpropagation die Gewichte der Neuronen der neuronalen Netze 11, 12 in der Weise angepasst, dass die neuronalen Netze 11, 12 als Ausgangsdaten die gemessenen technischen Parameter des gewalzten Walzgutes ausgeben. Dieses Trainingsverfahren wird für eine Vielzahl von historischen Daten bereits gewalzter Walzgüter für beide neuronale Netze 11, 12 durchgeführt. Beispielsweise werden Trainingsdatensätze von 10.000 gewalzte Walzgüter verwendet, die wiederholt zum Training der neuronalen Netze 11, 12 verwendet werden. Das Training der neuronalen Netze 11, 12 wird z.B. beendet, wenn die neuronalen Netze für einen vorgegebene Testdatensatz eine vorgegebene Qualität für die Vorhersage wenigstens eines vorgegebenen technischen Parameter der gewalzten Walzgüter aufweisen.

Für die Anpassung der Gewichte der Knoten der neuronalen Netze 11, 12 können auch weitere Optimierungsverfahren wie z.B. Gradient Descent, Adam, RMSProp usw. eingesetzt werden. Zudem können zur Anpassung der Gewichte der Koten (Neuronen) Fehlerfunktionen wie z.B. mittlerer quadratischer Fehler oder mittlerer absoluter Fehler eingesetzt werden.

Nach dem Training des ersten und des zweiten Vorhersagemodells 11, 12, werden die Vorhersagemodelle 11, 12 dazu verwendet, um mit den historischen Trainingsdaten das Optimierungsmodul 18, das vorzugsweise ein neuronales Netz aufweist oder als neuronales Netz ausgebildet ist, zu trainieren. Dabei werden die historischen Trainingsdatensätze der gewalzten Walzgüter der Reihe nach oder zufällig gewählt dem ersten Vorhersagemodell 11, dem zweiten Vorhersagemodell 12 und dem Optimierungsmodul 18 zugeführt.

Das Optimierungsmodul 18 wird mithilfe des ersten und des zweiten Vorhersagemodells und der Trainingsdaten in der Weise trainiert, dass ein neuer adaptierter Sollwert des Steuerparameters des Stellgliedes in der Weise ermittelt wird, dass das zweite Vorhersagemodell oder das erste Vorhersagemodell mit dem neuen adaptierten Sollwert des Steuerparameters einen zweiten Erwartungswert ermittelt, der näher am Sollwert des wenigstens einen technischen Parameters des gewalzten Walzgutes liegt als der vorhergehende zweite Erwartungswert.

Das erste Vorhersagemodell 11 ermittelt aufgrund der zugeführten Sollwerte 7 und/oder der berechneten Sollwerte 8 eines ersten historischen Trainingsdatensatzes einen ersten Erwartungswert 14 für wenigstens einen technischen Parameter für das Walzgut nach dem Walzen, wobei davon ausgegangen wird, dass das Walzgut mit den Sollwerten 7 und/oder den berechneten Sollwerten 8 gewalzt wird. Der erste Erwartungswert 14 wird einer Bewertungseinheit 17 zugeführt. Abhängig von der gewählten Ausführung können auch mehrere Erwartungswerte 14 für verschiedene technische Parameter des gewalzten Walzgutes vom ersten Vorhersagemodell ermittelt und der Bewertungseinheit 17 zugeführt werden.

Die Sollwerte 7 und/oder die berechneten Sollwerte 8 des ersten historischen Trainingsdatensatzes werden zudem zum Training dem Optimierungsmodul 18 zugeführt. Das Optimierungsmodul 18 ermittelt einen verbesserten adaptierten Sollwert eines Steuerparameters wenigstens eines Stellgliedes der Walzanlage für den ersten historischen Trainingsdatensatz. Beispielsweise wird der berechnete Sollwert 8 beim Start des Verfahrens um einen vorgegebenen Wert, beispielsweise um 1%, erhöht. Der verbesserte adaptierte Sollwert des Steuerparameters des Stellgliedes soll dazu führen, dass ein Walzgut, das mit dem verbesserten adaptierten Sollwert des Steuerparameters des Stellgliedes der Walzanlage gewalzt wird, nach dem Walzen einen technischen Parameter aufweist, der möglichst genau einem vorgegebenen Sollwert des technischen Parameters des gewalzten Walzgutes oder einem vorgegebenen Sollwertbereich des technischen Parameters des gewalzten Walzgutes entspricht. Das Optimierungsmodul 18 kann mehrere verbesserte adaptierte Sollwerte für mehrere Steuerparameter mehrerer Stellglieder der Walzanlage ermitteln. Das Optimierungsmodul 18 ist ausgebildet, um verbesserte adaptierte Sollwerte der Steuerparameter der Stellglieder in der Weise zu ermitteln, dass ein Walzgut, das mit den verbesserten adaptierten Soll-werten der Steuerparameter der Stellglieder der Walzanlage gewalzt wird, mit größerer Wahrscheinlichkeit nach dem Walzen wenigstens einen technischen Parameter aufweist, der einem vorgegebenen Sollwert des technischen Parameters entspricht.

Abhängig von der gewählten Ausführung können und sollen nicht alle der berechneten Sollwerte (Setup-Werte) verändert werden dürfen. Deswegen kann das Optimierungsmodul 18 eine Liste mit freien berechneten Sollwerten der Steuerparameter der Stellglieder der Walzanlage aufweisen, die verändert werden dürfen (beispielsweise Geschwindigkeit der Walzen, Anstellung der Walzen, etc.).

Das Optimierungsmodul 18 erhält zudem von der Bewertungseinheit 17 einen Bewertungswert 16. Der Bewertungswert 16 kann eine Zahl oder eine Information darstellen und der Bewertungswert 16 kann beim Start des Verfahrens auf einen vorgegebenen Wert wie z.B. auf den Wert wahr festgelegt sein. Das Optimierungsmodul 18 ermittelt basierend auf den Sollwerten 7 und/oder den berechneten Sollwerten 8 und abhängig von dem Bewertungswert 16 wenigstens einen Korrekturwert 27 für den berechneten Sollwert 8 des Steuerparameter des Stellgliedes der Walzanlage und gibt den Korrekturwert 27 an eine Verknüpfungseinheit 20. Der Korrekturwert 27 kann in einer einfachen Ausführung 1% des berechneten Sollwertes 8 darstellen. Weist der Bewertungswert 16 den Wert wahr auf, dann erhält der Korrekturwert ein positives Vorzeichen. Weist der Bewertungswert 16 den Wert falsch auf, dann erhält der Korrekturwert z.B. ein negatives Vorzeichen oder wird wenigstens reduziert.

Die Verknüpfungseinheit 20 ermittelt anhand des Korrekturwertes 27 und des berechneten Sollwertes 8 einen adaptierten Sollwert 19 und übergibt den adaptierten Sollwert 19 an das zweite Vorhersagemodell 12. Es können auch mehrere Korrekturwerte 27 für mehrere berechnete Sollwerte 8 von dem Optimierungsmodul 18 berechnet werden. In diesem Fall ermittelt die Verknüpfungseinheit 20 anhand der Korrekturwerte 27 und der berechneten Sollwerte 8 mehrere adaptierte Sollwerte 19 und übergibt die adaptierten Sollwerte 19 an das zweite Vorhersagemodell 12.

Beispielsweise kann die Verknüpfungseinheit 20 den Korrekturwert 27 und den berechneten Sollwert 8 zu dem adaptierten Sollwert 19 addieren. Zudem kann die Verknüpfungseinheit 20 den adaptierten Sollwert 8 mit dem Korrekturwert 27 multiplizieren, um den adaptierten Sollwert 19 zu erhalten. Abhängig von der gewählten Ausführungsform kann auf die Verknüpfungseinheit 20 auch verzichtet werden. Bei dieser Ausführung ermittelt das Optimierungsmodul 18 selbst abhängig vom Bewertungswert 16 den Korrekturwert 27 und abhängig vom Korrekturwert 27 und dem berechneten Sollwert 8 den adaptierten Sollwert 19. Das Optimierungsmodul 18 gibt den adaptierten Sollwert 19 an das zweite Vorhersagemodell.

Zudem werden dem zweiten Vorhersagemodell 12 die Sollwerte 7 zugeführt. Das zweite Vorhersagemodell ist gemäß dem Verfahren der Figur 3 trainiert worden.

Das zweite Vorhersagemodell 12 ermittelt aufgrund des adaptierten Sollwertes 19 und vorzugsweise des wenigstens einen zugeführten Sollwertes 7 des historischen ersten Trainingsdatensatzes einen zweiten Erwartungswert 15 für den vorgegebenen technischen Parameter des Walzgutes nach dem Walzen unter der Annahme, dass das Walzgut mit dem adaptierten Sollwert des Steuerparameters des Stellgliedes der Walzanlage gewalzt wird. Abhängig von der gewählten Ausführung können mehrere zweite Erwartungswerte 15 für verschiedene technische Parameter des gewalzten Walzgutes von dem zweiten Vorhersagemodell 15 für den historischen ersten Trainingsdatensatzes ermittelt werden. Der oder die zweiten Erwartungswerte 15 des oder der technischen Parameter des gewalzten Walzgutes werden der Bewertungseinheit 17 zugeführt.

Die Bewertungseinheit 17 ermittelt abhängig von dem wenigstens einen ersten Erwartungswert 14 und dem wenigstens einen zweiten Erwartungswert 15 durch das beschriebene Verfahren den Bewertungswert 16. Die Bewertungseinheit 17 kann nach vorgegebenen Formeln und/oder Verfahren die einzelnen ersten und zweiten Erwartungswerte bewerten und abhängig von den bewerteten ersten und zweiten Erwartungswerte den Bewertungswert ermitteln.
Beispielsweise vergleicht die Bewertungseinheit 17 den ersten und den zweiten Erwartungswert 14, 15 mit Sollwerten für das gewalzte Walzgutes aus der folgenden Gruppe:
- Ist-Breite des gewalzten Walzgutes;
- Ist-Profil des gewalzten Walzgutes in einer Ebene senkrecht zur Walzrichtung;
- Ist-Kontur des Walzgutes;
- Breite, Höhe und/oder Länge des Walzgutes nach dem Walzen;
- Legierungszusammensetzung des Walzgutes nach dem Walzen;
- Kontur des Querschnittes des Walzgutes nach dem Walzen;
- Temperatur des Walzgutes direkt nach dem Verlassen des Walzgerüstes;
- Temperatur des gewalzten Walzgutes nach einem Aufwickeln des Walzgutes auf eine Rolle bestimmter Größe.

Die Bewertungseinheit vergleicht den ersten und den zweiten Erwartungswert mit dem entsprechenden Sollwert und bildet daraus z.B. folgende Werte:
- Differenz zwischen dem ersten Erwartungswert für die Breite des gewalzten Walzgutes und Sollwert für die Breite des gewalzten Walzgutes;
- Differenz zwischen dem ersten Erwartungswert für das Profil des gewalzten Walzgutes und Sollwert für das Profil des gewalzten Walzgutes in einer Ebene senkrecht zur Walzrichtung;
- Differenz zwischen dem ersten Erwartungswert für die Kontur des gewalzten Walzgutes in Längs- und/oder in Querrichtung und dem Sollwert der Kontur des gewalzten Walzgutes in Längs- und/oder in Querrichtung; die Kontur definiert einen Abstand einer Oberseite oder einer Unterseite des Walzgutes zu einer Mittenebene des Walzgutes entlang der Breite und/oder der Länge des Walzgutes;
- Differenz zwischen dem ersten Erwartungswert für die Höhe und/oder die Länge des Walzgutes nach dem Walzen und dem Sollwert für die Höhe und/oder die Länge des Walzgutes nach dem Walzen;
- Unterschied zwischen dem ersten Erwartungswert für die Legierungszusammensetzung des Walzgutes nach dem Walzen und dem Sollwert für die Legierungszusammensetzung des Walzgutes nach dem Walzen;
- Unterschied zwischen dem ersten Erwartungswert für die Kontur des Querschnittes des Walzgutes nach dem Walzen und dem Sollwert für die Kontur des Querschnittes des Walzgutes nach dem Walzen;
- Differenz zwischen dem ersten Erwartungswert für die Temperatur des Walzgutes direkt nach dem Verlassen des Walzgerüstes und dem Sollwert für die Temperatur des Walzgutes direkt nach dem Verlassen des Walzgerüstes;
- Differenz zwischen dem ersten Erwartungswert für die Temperatur des gewalzten Walzgutes nach einem Aufwickeln des Walzgutes auf eine Rolle bestimmter Größe und dem Sollwert für die Temperatur des gewalzten Walzgutes nach einem Aufwickeln des Walzgutes auf eine Rolle bestimmter Größe;
- Differenz zwischen zweiten Erwartungswert für die Breite des gewalzten Walzgutes und Sollwert für die Breite des gewalzten Walzgutes;
- Differenz zwischen dem zweiten Erwartungswert für das Profil des gewalzten Walzgutes und Sollwert für das Profil des gewalzten Walzgutes in einer Ebene senkrecht zur Walzrichtung;
- Differenz zwischen dem zweiten Erwartungswert für die Kontur des gewalzten Walzgutes in Längs- und/oder in Querrichtung und dem Sollwert der Kontur des gewalzten Walzgutes in Längs- und/oder in Querrichtung;
- Differenz zwischen dem zweiten Erwartungswert für die Höhe und/oder die Länge des Walzgutes nach dem Walzen und dem Sollwert für die Höhe und/oder die Länge des Walzgutes nach dem Walzen;
- Unterschied zwischen dem zweiten Erwartungswert für die Legierungszusammensetzung des Walzgutes nach dem Walzen und dem Sollwert für die Legierungszusammensetzung des Walzgutes nach dem Walzen;
- Unterschied zwischen dem zweiten Erwartungswert für die Kontur des Querschnittes des Walzgutes nach dem Walzen und dem Sollwert für die Kontur des Querschnittes des Walzgutes nach dem Walzen;
- Differenz zwischen dem zweiten Erwartungswert für die Temperatur des Walzgutes direkt nach dem Verlassen des Walzgerüstes und dem Sollwert für die Temperatur des Walzgutes direkt nach dem Verlassen des Walzgerüstes;
- Differenz zwischen dem zweiten Erwartungswert für die Temperatur des gewalzten Walzgutes nach einem Aufwickeln des Walzgutes auf eine Rolle bestimmter Größe und dem Sollwert für die Temperatur des gewalzten Walzgutes nach einem Aufwickeln des Walzgutes auf eine Rolle bestimmter Größe.

Vergleicht die Bewertungseinheit 17 mehrere erste und zweite Erwartungswerte 14, 15, so kann die Bewertungseinheit in einer einfachen Ausführung Mittelwerte der Abweichungen der ersten Erwartungswerte von dem Sollwert des technischen Parameters oder den Sollwerten der technischen Parameter und Mittelwerte der Abweichungen der zweiten Erwartungswerte von dem Sollwert des technischen Parameters oder den Sollwerten der technischen Parameter vergleichen.

In einer weiteren Ausführung vergleicht die Bewertungseinheit 17 mehrere erste und zweite Erwartungswerte 14, 15 und bewertet die ersten oder die zweiten Erwartungswerte als besser, je nachdem, ob bei den ersten oder den zweiten Erwartungswerten weniger Erwartungswerte von einer vorgegebenen Toleranz von dem vorgegebenen Sollwert des technischen Parameters oder von den vorgegebenen Sollwerten der technischen Parameter abweichen. Es können jedoch auch andere Verfahren verwendet werden, um die Qualität des adaptierten Sollwertes und damit die Qualität des Optimierungsmoduls zu bewerten.

In einer einfachen Ausführung weist der Bewertungswert 16 einen positiven Wert 1 oder den Wert wahr auf, wenn der zweite Erwartungswert eine kleinere Differenz vom Sollwert des technischen Parameters des gewalzten Walzgutes aufweist als der erste Erwartungswert. In einer einfachen Ausführung weist der Bewertungswert 16 einen negativen Wert 1 oder den Wert falsch auf, wenn der zweite Erwartungswert eine größere Differenz vom Sollwert des technischen Parameters des gewalzten Walzgutes aufweist als der erste Erwartungswert. Die Sollwerte können auch als Wertebereiche für technische Parameter des gewalzten Walzgutes festgelegt sein. Die Sollwerte werden der Bewertungseinheit 17 über einen Dateneingang vorgegeben, die z.B. in einem Datenspeicher abgelegt sind.

Die Bewertungseinheit 17 vergleicht somit den ersten und den zweiten Erwartungswert 14, 15 des ersten und des zweiten Vorhersagemodells 11, 12 und ermittelt, welches Vorhersagemodell Erwartungswerte mit einer besseren Qualität für das gewalzte Walzgut ermittelt hat. Beispielsweise ist die durchschnittliche Abweichung z.B. die Differenz zwischen Soll-/Ist-Breite und/oder die Differenz von Soll-/Ist-Kontur und/oder die Differenz von Soll-Ist-Planheit, etc. der technischen Parameter der ersten Erwartungswerte 14 des ersten Vorhersagemodells 11 kleiner als die der technischen Parameter der zweiten Erwartungswerte 15 des zweiten Vorhersagemodells 12, so hat die Veränderung der berechneten Sollwerte durch das Optimierungsmodul 18 zu einem schlechteren Ergebnis geführt. Ist die Abweichung von 15 jedoch geringer, so hat die Veränderung der berechneten Sollwerte (Setupwerte) zu einem besseren Ergebnis geführt. Somit gibt die Bewertungseinheit 17 einen positiven Wert 1, d.h. einen Wert wahr als Bewertungswert 16 aus.

Ergibt jedoch der Vergleich durch die Bewertungseinheit 17 ein schlechteres Ergebnis für die zweiten Erwartungswerte 15 des zweiten Vorhersagemodells 12 im Vergleich mit den ersten Erwartungswerten 14 des ersten Vorhersagemodells 11 in Bezug auf die gewünschte Qualität des gewalzten Walzgutes, so gibt die Bewertungseinheit 17 einen negativen Bewertungswert -1, d.h. einen Wert falsch aus. Der Bewertungswert 16 wird dem Optimierungsmodul 18 als Feedback zugeführt.

Das beschriebene Verfahren wird dem wenigstens einen berechneten Sollwert 8 und vorzugsweise mit dem wenigstens einen Sollwert 7 eines zweiten historischen Trainingsdatensatzes wiederholt. Der der berechnete Sollwert 8 und vorzugsweise der Sollwert 7 des zweiten historischen Trainingsdatensatzes des gewalzten Walzgutes werden dem ersten Vorhersagemodell 7 und dem Optimierungsmodul 18 zugeführt. Das erste Vorhersagemodell 11 ermittelt einen ersten Erwartungswert für den wenigstens einen technischen Parameter des gewalzten Walzgutes des zweiten Trainingsdatensatzes.

Das Optimierungsmodul 18 ermittelt basierend auf dem wenigstens einen Sollwert 7 und/oder dem berechneten Sollwert 8 des zweiten Trainingsdatensatzes und abhängig von dem Bewertungswert 16 des ersten Trainingsdatensatzes wenigstens einen Korrekturwert 27 für den berechneten Sollwert 8 des Steuerparameter des Stellgliedes der Walzanlage und gibt den Korrekturwert 27 an die Verknüpfungseinheit 20. Die Verknüpfungseinheit 20 ermittelt anhand des Korrekturwertes 27 und des berechneten Sollwertes 8 einen neuen adaptierten Sollwert 19 und übergibt den neuen adaptierten Sollwert 19 an das zweite Vorhersagemodell 12. Es können auch mehrere Korrekturwerte 27 für mehrere berechnete Sollwerte 8 von dem Optimierungsmodul 18 berechnet werden. In diesem Fall ermittelt die Verknüpfungseinheit 20 anhand der Korrekturwerte 27 und der berechneten Sollwerte 8 mehrere adaptierte Sollwerte 19 und übergibt die adaptierten Sollwerte 19 an das zweite Vorhersagemodell 12.

Dem zweiten Vorhersagemodell 12 wird der neue adaptierte Sollwert 19 und vorzugsweise ein Sollwert und/oder ein technischer Parameter des Walzgutes des zweiten Trainingsdatensatzes zugeführt. Das zweite Vorhersagemodell 12 ermittelt aufgrund des neuen adaptierten Sollwertes 19 und vorzugsweise des zugeführten Sollwertes 7 des zweiten Trainingsdatensatzes und/oder des technischen Parameters des zweiten Trainingssatzes einen zweiten Erwartungswert 15 für den technischen Parameter des Walzgutes nach dem Walzen unter der Annahme, dass das Walzgut mit dem neuen adaptierten Sollwert 19 des Steuerparameters des Stellgliedes der Walzanlage gewalzt wird. Abhängig von der gewählten Ausführung können mehrere zweite Erwartungswerte 15 für verschiedene technische Parameter des gewalzten Walzgutes von dem zweiten Vorhersagemodell 15 für den zweiten Trainingsdatensatzes ermittelt werden.

Die Bewertungseinheit 17 ermittelt abhängig von dem wenigstens einen ersten Erwartungswert 14 und dem wenigstens einen zweiten Erwartungswert 15 des zweiten Trainingsdatensatzes den Bewertungswert 16. Die Bewertungseinheit 17 kann nach vorgegebenen Formeln und/oder Verfahren die einzelnen ersten und zweiten Erwartungswerte bewerten und abhängig von den bewerteten ersten und zweiten Erwartungswerte den Bewertungswert ermitteln. Der Bewertungswert 16 wird dem Optimierungsmodul 18 übermittelt.

Dieses Verfahren wird für eine festgelegte Anzahl von historischen Trainingsdatensätzen wiederholt, z.B. für 3000 historische Trainingsdatensätze. Dann wird mithilfe von 100 Testdatensätzen von historisch gewalzten Walzgütern die Qualität des Optimierungsmoduls überprüft. Die Testdatensätze können die gleichen technischen Parameter vor dem Walzen und/oder nach dem Walzen des Walzgutes und/oder die Sollwerte 7 und/oder die berechneten Sollwerte 8 der Steuerparameter der Stellglieder der Walzanlage aufweisen wie die Trainingsdatensätze. Vorzugsweise entsprechen die Werte der Testdatensätze nicht den Werten der Trainingsdatensätze. Die Qualität des trainierten Optimierungsmoduls 18 wird z.B. als ausreichend eingestuft, wenn für eine festgelegte Anzahl von Testdatensätzen der Bewertungswert 16 den Wert wahr aufweist. Beispielsweise kann die festgelegte Anzahl bei 90% liegen.

Zudem kann das neuronale Netz des Optimierungsmoduls so lange mit den Trainingsdaten trainiert werden, bis eine spezifizierte Fehlerfunktion keine weitere Verbesserung des Optimierungsmoduls erwarten lässt. Beispiel für so eine Fehlerfunktion ist der mittlere quadratische Fehler.

Reicht die Qualität des Optimierungsmoduls noch nicht aus, dann wird das Optimierungsmodul, wie oben beschrieben, weiter mit einer vorgegebenen Anzahl von Trainingsdaten trainiert. Anschließend wird die Qualität des Optimierungsmoduls wieder mit den Testdaten überprüft. Die Qualität des Optimierungsmoduls kann auch als gut angesehen werden, wenn bei wiederholter Überprüfung der Qualität des Optimierungsmoduls sich die Qualität nicht oder nur unwesentlich, z.B. unter 0,5% verbessert. Das Optimierungsmodul 18 wird somit über ein maschinelles Lernen mithilfe der zwei trainierten neuronalen Netze des ersten und des zweiten Vorhersagemodells optimiert.

Der oder die adaptierten Sollwerte des Optimierungsmoduls 18, das die gewünschte Qualität aufweist, wird vom Rechensystem 2 zur Steuerung und/oder Regelung der Steuerparameter der Stellglieder der Walzanlage verwendet.

Abhängig von der gewählten Ausführung verändert das Optimierungsmodul 18 für jeden Testdatensatz mehrere berechnete Sollwerte 8 von Steuerparametern mehrerer Stellglieder der Walzanlage. Auf diese Weise können berechnete Sollwerte 8 für Steuerparameter verschiedener Stellglieder variiert werden. Abhängig von der gewählten Ausführungsform kann auch nur ein Sollwert eines Steuerparameters eines Stellgliedes der Walzanlage optimiert werden.

Im Folgenden wird ein Beispiel für ein Training des neuronalen Netzes des Optimierungsmoduls 18 beschrieben: Ist der Bewertungswert 16 positiv (wahr), so wird das neuronale Netz des Optimierungsmoduls 18 in seiner Aussage bestärkt. Ist der Bewertungswert 16 negativ (falsch), so wird das neuronale Netz 18 in seiner Aussage geschwächt.
Beispiel: Es sind als "freie" Parameter, d.h. als berechnete Sollwerte 8 die Drehgeschwindigkeit der Walzen im letzten Gerüst und die Walzkraft der Walzen im letzten Gerüst definiert. Die ersten Trainingsdaten enthalten wenigstens einen Sollwert für die Walzgeschwindigkeit, einen Sollwert für die Walzkraft, einen technischen Parameter des Walzgutes vor dem Walzen und einen technischen Parameter des Walzgutes nach dem Walzen. Unter diesen Voraussetzungen gibt das neuronale Netz des Optimierungsmoduls 18 bei einem ersten Trainingsschritt mit den ersten Trainingsdaten als adaptierte Sollwerte 19 eine Beschleunigung der Walzgeschwindigkeit um 0.5m/s und eine Verringerung der Walzkraft um 1 MN aus.

Angenommen, diese adaptierten Sollwerte 19 führen zu einem besseren Walzergebnis gemäß dem Vergleich zwischen dem ersten Erwartungswert 14 des ersten Vorhersagemodells 11 und dem zweiten Erwartungswert 15 des zweiten Vorhersagemodells 12 mithilfe der Bewertungseinheit 17, dann ist der nächste Bewertungswert 16 wieder positiv. Bei einem positiven Bewertungswert 16 wird das neuronale Netz des Optimierungsmoduls 18 bestärkt und somit wird für den nächsten Trainingsschritt mit neuen Trainingsdaten die adaptierten Sollwerte 19, d.h. die Walzgeschwindigkeit noch mal um 0.5m/s erhöht und die Walzkraft noch mal um 1 MN reduziert. Führen diese adaptierten Sollwerte 19 zu einem schlechteren Walzergebnis gemäß dem Vergleich zwischen dem ersten Erwartungswert 14 des ersten Vorhersagemodells 11 und dem zweiten Erwartungswert 15 des zweiten Vorhersagemodells 12 mithilfe der Bewertungseinheit 17, dann ist der nächste Bewertungswert 16 negativ. Damit wird beim nächsten Trainingsschritt mit den nächsten Trainingsdaten das Optimierungsmodul die adaptierten Sollwerte 19, d.h. die Walzgeschwindigkeit um 0.5m/s reduzieren und die Walzkraft um 1MN erhöhen, d.h. die letzte Änderung der adaptierten Sollwerte 19 wird wieder rückgängig gemacht.

Zu Beginn des Trainings wird der Bewertungswert 16 meist negativ sein. Im Laufe der Zeit lernt das neuronale Netz des Optimierungsmoduls 18, wie es die Sollwerte der Steuerparameter der Stellglieder der Walzanlage (Setupwerte) verändern muss, um den Bewertungswert 16 in Richtung positiven Wert zu maximieren. Das Training mit den Trainingsschritten mit jeweils neuen Trainingsdatensätzen wird vorzugsweise solange wiederholt, bis der Bewertungswert 16 bei einer vorgegebenen Anzahl von Trainingsschritten immer oder überwiegend (z.B. mehr als 80%) positiv ist und sich die Abweichungen der zweiten Erwartungswerte von den Sollwerten der technischen Parameter der gewalzten Walzgüter nicht weiter minimieren. Ein ausreichend trainiertes Optimierungsmoduls 18 wird vorzugsweise erkannt und das Training beendet, wenn für eine vorgegebene Anzahl von Testdatensätzen alle zweiten Erwartungswerte 15 des neuronalen Netzes des zweiten Vorhersagemodells 12 den Wert 0 aufweisen. Das bedeutet, dass das neuronale Netz des Optimierungsmoduls 18 die adaptierten Sollwerte so verändert hat, dass die Ist-Werte der definierten technischen Parameter (Breite, Planheit, Kontur, Profil, etc.) der gewalzten Walzgüter den gewünschten Soll-Werten der technischen Parameter der gewalzten Walzgüter entsprechen.

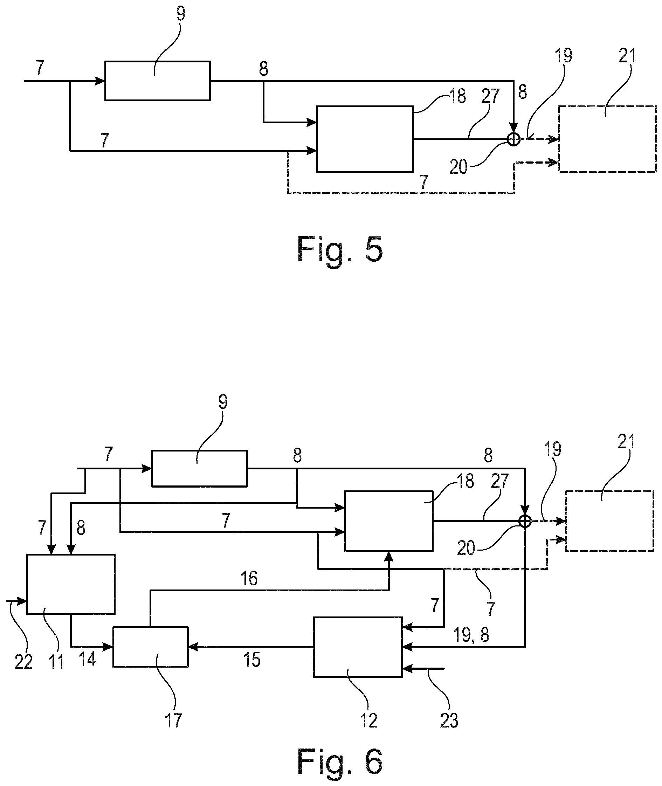

Figur 5 zeigt in einer schematischen Darstellung den Einsatz eines Optimierungsmoduls 18 im Rechensystem 2, wobei das Optimierungsmodul 18 wenigstens einen adaptierten Sollwert 19 eines Steuerparameters wenigstens eines Stellgliedes der Walzanlage an ein Regelsystem 21 übergibt. Das Optimierungsmodul 18 ist gemäß der Beschreibung der Figur 4 ausgebildet und gemäß dem Verfahren der Figur 4 trainiert worden. Das Rechensystem gibt den Sollwert 19 des wenigstens einen Steuerparameters des wenigstens einen Stellgliedes über die Verknüpfungseinheit 20 an das Regelsystem 21. Die Verknüpfungseinheit 20 kann zusätzlich adaptierte Sollwerte 8 an das Regelsystem 21 übergeben. Zudem können auch Sollwerte 7 an das Regelsystem 21 übergeben werden. Weiterhin kann auf den Sollwert-Berechnungsblock 9 verzichtet werden, wobei die Sollwerte 7 und/oder die berechneten Sollwerte 8 von dem Rechensystem 2 oder einer Datenbank bereitgestellt werden.

Das Regelsystem 21 stellt beispielsweise eine Basisautomatisierung für wenigstens einen Teil der Stellglieder der Walzanlage dar. Das Regelsystem 21 empfängt über Sensoren Istwerte der Steuerwerte der Stellglieder 13 der Walzanlage und/oder Istwerte der technischen Parameter des Walzgutes vor dem Walzen und/oder Istwerte der technischen Parameter des Walzgutes nach dem Walzen durch mindestens ein Walzgerüst. Mithilfe des Optimierungsmoduls 18, das gemäß Figur 4 trainiert wurde, kann eine verbesserte Steuerung und/oder Regelung der Stellglieder 13 der Walzanlage in der Weise erreicht werden, dass die gewalzten Walzgüter, insbesondere gewalzte Metallbänder, mit einer größeren Wahrscheinlichkeit und/oder mit einer größeren Anzahl wenigstens einen vorgegebenen technischen Parameter mit einem gewünschten Sollwert oder Sollwertebereich aufweisen. Auf diese Weise können komplexe Anforderungen an die technischen Parameter der gewalzten Walzgüter, insbesondere der gewalzten Metallbänder, mit einer höheren Wahrscheinlichkeit eingehalten werden.

Abhängig von der gewählten Ausführung kann das Rechensystem 2 die Stellglieder der Walzanlage auch direkt steuern und/oder regeln. Dazu kann das Rechensystem 2 über Sensoren Istwerte der Steuerparameter der Stellglieder der Walzanlage und/oder Istwerte der technischen Parameter des Walzgutes vor dem Walzen und/oder der technischen Parameter des Walzgutes nach dem Walzen durch mindestens ein Walzgerüst erhalten.

Figur 6 zeigt in einer schematischen Darstellung ein Verfahren zum Betreiben der Walzanlage und dem gleichzeitigen Optimieren wenigstens eines Sollwertes eines Steuerparameters wenigstens eines Stellgliedes Optimierungsmoduls während des Betriebes der Walzanlage. Dabei wird das Optimierungsmodul 18, wie in Figur 5 beschrieben, zur Vorgabe von Sollwerten für Steuerwerte der Stellglieder der Walzanlage an ein Regelsystem 21 eingesetzt. Gleichzeitig sind jedoch das erste und das zweite Vorhersagemodell 11, 12, die Bewertungseinheit 17 und optional die Verknüpfungseinheit 20 gemäß der Figur 4 vorgesehen, und werden gemäß der Beschreibung der Figur 4 mit Daten versorgt und arbeiten gemäß der Beschreibung der Figur 4. Zusätzlich zu der Ausführungsform der Figur 4 weisen das erste und das zweite Vorhersagemodell 11, 12 weitere Eingänge 22, 23 auf. Über die weiteren Eingänge 22, 23 erhalten das erste und/oder das zweite Vorhersagemodell 11, 12 die Sollwerte 7 und/oder die berechneten Sollwerte 8 und die adaptierten Sollwerte 19 der Steuerparameter der Stellglieder während des Betriebes der Walzanlage und die gemessenen Werte der technischen Parameter der gewalzten Walzgüter, beispielsweise der Metallbänder. Somit können im Betrieb der Walzanlage das erste und/oder das zweite Vorhersagemodell 11, 12 mithilfe eines überwachten maschinellen Lernverfahrens gemäß dem Verfahren der Figur 4 weiter optimiert werden. Auf diese Weise wird eine Anpassung des ersten und/oder des zweiten Vorhersagemodells an die tatsächlichen Gegebenheiten während des Betriebes der Walzanlage erreicht. Zudem wird dadurch auch das Optimierungsmodul 18 und wenigstens ein adaptierter Sollwert eines Steuerparameters des wenigstens einen Stellgliedes der Walzanlage im Betrieb verbessert.

In analoger Weise kann auch das überwachte maschinelle Lernen des ersten und des zweiten Vorhersagemodells 11, 12 gemäß der Figur 6 auch ohne die Verwendung eines Regelsystems 21 beim Betrieb der Walzanlage durchgeführt werden.

Das erste und/oder das zweite Vorhersagemodell können als neuronale Netze durch überwachtes Lernen trainiert werden. Hierbei wird das Netz, dessen Architektur festgelegt wurde und dessen Gewichte zufällig initialisiert wurden, während des Lernprozesses mit Eingangsdaten gespeist. Die Ausgabe des Netzes wird mit dem Sollwert verglichen und anschließend werden die Gewichte des Netzes korrigiert. Dabei sind die Ein- und Ausgabepaare des Netzes bekannt. Im Rahmen des vorliegenden Verfahrens wird weiters bevorzugt derart vorgegangen, dass die Gewichtungswerte des neuronalen Netzes beim überwachten Lernen mit Hilfe des Backpropagation-Algorithmus ermittelt werden. Der Backpropagation-Algorithmus ist ein numerisches Lernverfahren, das auf der Optimierung des mittleren quadratischen Fehlers beruht. Es soll eine möglichst genaue Abbildung von in das neuronale Netz eingegebenen Eingangsdaten auf die gewünschten Ausgabedaten erreicht werden. Dazu wird die Qualität der Abbildung durch eine Fehlerfunktion beschrieben, die z.B. durch den quadratischen Fehler definiert wird. Es können auch andere Fehlerfunktionen verwendet werden wie z.B. das Maximum/der Mittelwert über betragsmäßige Abweichungen.

Der Backpropagation-Algorithmus läuft hierbei in folgenden Phasen ab: Zunächst wird ein Eingabemuster angelegt und vorwärts durch das Netz propagiert. Die Ausgabe des Netzes wird mit der gewünschten Ausgabe verglichen, wobei die Differenz der beiden Werte als Fehler des Netzes erachtet wird. Schließlich wird der Fehler über die Ausgabe zur Eingabeschicht zurück propagiert, wobei die Gewichtungen der Neuronen-Verbindungen abhängig von ihrem Einfluss auf den Fehler geändert werden. Dies garantiert bei einem erneuten Anlegen des Eingabemusters eine Annäherung an die gewünschte Ausgabe. Das neuronale Netz weist Neuronen auf, die in verschiedenen Schichten angeordnet sind. Zwischen der Ein- und der Ausgabeschicht befinden sich die verborgenen Schichten. Beispielsweise wird als neuronales Netz ein Feedforward-Netz, insbesondere ein vollständig verbundenes Feedforward-Netz, gewählt wird. Dadurch ergibt sich eine besonders einfache Netzstruktur, wobei man von einem vollständig verbundenen Netz dann spricht, wenn jedes Neuron einer bestimmten Schicht mit jedem Neuron der darauffolgenden Schicht verbunden ist. Beispielsweise weist das künstliche neuronale Netz wenigstens drei Schichten auf. Es können jedoch auch andere Arten von neuronalen Netzen verwendet werden.

### Bezugszeichenliste

- 1: Walzgut
- 2: Rechensystem
- 3: Walzgerüst
- 4: Arbeitswalze
- 5: Stützwale
- 6: Regler
- 7: Sollwert
- 8: berechneter Sollwert
- 9: Sollwert-Berechnungsblock
- 10: Vorhersagemodell
- 11: erstes Vorhersagemodell
- 12: zweites Vorhersagemodell
- 13: Stellglied
- 14: erster Erwartungswert
- 15: zweiter Erwartungswert
- 16: Bewertungswert
- 17: Bewertungseinheit
- 18: Optimierungsmodul
- 19: adaptierter Sollwert
- 20: Verknüpfungseinheit
- 21: Regelsystem
- 22: erster adaptierter Eingang
- 23: zweiter adaptierter Eingang
- 24: Konturverlauf
- 25: Schnittstelle
- 26: Datenspeicher
- 27: Korrekturwert
- 28: technischer Parameter Walzgut vor Walzvorgang
- 29: technischer Parameter Walzgut nach dem Walzvorgang
- 30: Qualitätsbeurteilung
- 31: weiterer Datenspeicher

## Patentansprüche

1. Computerimplementiertes Verfahren zum Ermitteln wenigstens eines Sollwertes eines Steuerparameters zum Steuern wenigstens eines Stellgliedes einer Walzanlage,
wobei einem ersten Vorhersagemodell ein Sollwert für den Steuerparameter zur Steuerung des Stellgliedes der Walzanlage zugeführt wird,
wobei das erste Vorhersagemodell anhand des Sollwertes des Steuerparameters einen ersten Erwartungswert für wenigstens einen technischen Parameter des Walzgutes nach dem Walzen mit dem Sollwert des Steuerparameters des Stellgliedes der Walzanlage ermittelt,
wobei einem zweiten Vorhersagemodell ein adaptierter Sollwert des Steuerparameters zur Steuerung des Stellgliedes der Walzanlage zugeführt wird,
wobei das zweite Vorhersagemodell anhand des adaptierten Sollwertes des Steuerparameters einen zweiten Erwartungswert für den wenigstens einen technischen Parameter des Walzgutes nach dem Walzen mit dem adaptierten Sollwert des Steuerparameters des Stellgliedes der Walzanlage ermittelt,
wobei der erste Erwartungswert und der zweite Erwartungswert mit einem Sollwert des technischen Parameters für das gewalzte Walzgut verglichen werden, und wobei abhängig von dem Ergebnis des Vergleichs ein neuer adaptierter Sollwert des Steuerparameters des Stellgliedes mit einem Optimierungsmodul in der Weise ermittelt wird, dass das zweite Vorhersagemodell mit dem neuen adaptierten Sollwert des Steuerparameters einen zweiten Erwartungswert ermittelt, der näher am Sollwert des technischen Parameters des gewalzten Walzgutes liegt als der vorhergehende zweite Erwartungswert, und
wobei der neue adaptierte Sollwert des Steuerparameters für eine Steuerung und/oder Regelung des Stellgliedes der Walzanlage vorgesehen ist.

2. Verfahren nach Anspruch 1, wobei der Sollwert des Steuerparameters des Stellgliedes, der dem ersten Vorhersagemodell zugeführt wird, mithilfe eines physikalischen Modells des Walzvorganges unter Berücksichtigung eines gewünschten Sollwertes eines technischen Parameters des gewalzten Walzgutes ermittelt wird.

3. Verfahren nach einem der vorhergehenden Ansprüche, wobei die Walzanlage weitere Stellglieder aufweist, um Betriebsparameter der Walzanlage einzustellen,
wobei dem ersten Vorhersagemodell Sollwerte für Steuerparameter zur Steuerung der weiteren Stellglieder der Walzanlage zugeführt werden,
wobei das erste Vorhersagemodell anhand der Sollwerte der Steuerparameter der weiteren Stellglieder einen ersten Erwartungswert für wenigstens einen technischen Parameter des Walzgutes nach dem Walzen mit den Sollwerten der Steuerparameter der weiteren Stellglieder der Walzanlage ermittelt,
wobei dem zweiten Vorhersagemodell adaptierte Sollwerte der Steuerparameter zur Steuerung der weiteren Stellglieder der Walzanlage zugeführt werden,
wobei das zweite Vorhersagemodell anhand der adaptierten Sollwerte der Steuerparameter der weiteren Stellglieder einen zweiten Erwartungswert für den wenigstens einen technischen Parameter des Walzgutes nach dem Walzen mit den adaptierten Sollwerten der Steuerparameter der weiteren Stellglieder der Walzanlage ermittelt.

4. Verfahren nach einem der vorhergehenden Ansprüche, wobei abhängig von dem Ergebnis des Vergleichs der neue adaptierte Sollwert für den Steuerparameter des Stellgliedes der Walzanlage von dem Optimierungsmodul, das als trainiertes neuronales Netz ausgebildet ist, ermittelt wird.

5. Computerimplementiertes Verfahren zum Trainieren eines Optimierungsmoduls, das ein neuronales Netz aufweist, wobei das Optimierungsmodul vorgesehen ist, um abhängig von wenigstens einem Sollwert eines Steuerparameters eines Stellgliedes einer Walzanlage einen adaptierten Sollwert zum Steuern des Stellgliedes der Walzanlage zu ermitteln,
wobei wenigstens ein erstes Vorhersagemodell vorgesehen ist, wobei dem Optimierungsmodul und dem ersten Vorhersagemodell erste Trainingsdaten zugeführt werden, wobei die ersten Trainingsdaten wenigstens einen historischen Sollwert eines Steuerparameters eines Stellgliedes einer Walzanlage aufweisen, mit denen ein Walzgut in der Walzanlage gewalzt wurde,
wobei das Optimierungsmodul abhängig von einem Bewertungswert und abhängig von dem Sollwert des Steuerparameters des Stellgliedes der ersten Trainingsdaten einen adaptierten Sollwert des Steuerparameters des Stellgliedes ermittelt,
wobei das erste Vorhersagemodell anhand der ersten Trainingsdaten einen ersten Erwartungswert für wenigstens einen technischen Parameter des Walzgutes ermittelt, unter der Annahme, dass das Walzgut mit dem Sollwert des Steuerparameters des Stellgliedes gewalzt wird,
wobei das erste Vorhersagemodell oder ein zweites Vorhersagemodell anhand des adaptierten Sollwertes des Steuerparameters des Stellgliedes der Walzanlage und anhand der ersten Trainingsdaten einen zweiten Erwartungswert für den wenigstens einen technischen Parameter des Walzgutes nach dem Walzen mit dem adaptierten Sollwert des Steuerparameters des Stellgliedes der Walzanlage ermittelt,
wobei der erste Erwartungswert und der zweite Erwartungswert mit einem Sollwert des technischen Parameters für das gewalzte Walzgut verglichen werden, und wobei abhängig von dem Ergebnis des Vergleichs ein Bewertungswert ermittelt wird, wobei der Bewertungswert dem Optimierungsmodul zugeführt wird,
wobei dem Optimierungsmodul und dem ersten Vorhersagemodell zweite Trainingsdaten zugeführt werden, wobei die zweiten Trainingsdaten wenigstens einen Sollwert wenigstens eines Steuerparameters eines Stellgliedes einer Walzanlage aufweisen, mit denen ein zweites Walzgut in der Walzanlage gewalzt wurde,
wobei das Optimierungsmodul abhängig von dem Bewertungswert, der anhand der ersten Trainingsdaten ermittelt wurde, und abhängig von dem Sollwert des Steuerparameters des Stellgliedes der zweiten Trainingsdaten einen adaptierten Sollwert des Steuerparameters des Stellgliedes ermittelt,
wobei das erste Vorhersagemodell anhand der zweiten Trainingsdaten einen ersten Erwartungswert für wenigstens einen technischen Parameter des zweiten Walzgutes ermittelt, unter der Annahme, dass das zweite Walzgut mit dem Sollwert des Steuerparameters des Stellgliedes der zweiten Trainingsdaten gewalzt wird,
wobei das erste Vorhersagemodell oder das zweite Vorhersagemodell anhand des adaptierten Sollwertes des Optimierungsmoduls und anhand der zweiten Trainingsdaten einen zweiten Erwartungswert für den wenigstens einen technischen Parameter des zweiten Walzgutes nach dem Walzen ermittelt unter der Annahme, dass das zweite Walzgut mit dem adaptierten Sollwert des Steuerparameters des Stellgliedes der Walzanlage gewalzt wird,
wobei der erste Erwartungswert und der zweite Erwartungswert der zweiten Trainingsdaten mit dem Sollwert des technischen Parameters für das gewalzte zweite Walzgut verglichen werden, und wobei abhängig von dem Ergebnis des Vergleichs ein zweiter Bewertungswert ermittelt wird, wobei der zweite Bewertungswert dem Optimierungsmodul zugeführt wird,
wobei das Verfahren für eine vorgeschriebene Anzahl von weiteren Trainingsdaten wiederholt durchgeführt wird,
wobei anschließend eine Qualität des Optimierungsmoduls überprüft wird, wobei das Verfahren mit einer vorgegebenen Anzahl von Trainingsdaten wiederholt wird, wenn das Optimierungsmodul nicht die vorgegebene Qualität aufweist, wobei das Verfahren beendet wird, wenn das Optimierungsmodul die vorgegebene Qualität aufweist, und wobei anschließend der adaptierte Sollwert des Steuerparameters des Stellgliedes der Walzanlage, der vom Optimierungsmodul ermittelt wurde, für eine Steuerung und/oder Regelung der Walzanlage vorgesehen wird.

6. Verfahren nach Anspruch 5, wobei das neuronale Netz des Optimierungsmoduls abhängig von dem Ergebnis des Vergleichs in der Weise trainiert wird, dass der neue adaptierte Sollwert, der anhand der n-ten Trainingsdaten ermittelt wurde, so ermittelt wird, dass der neue zweite Erwartungswert der n-ten Trainingsdaten näher am vorgegebenen Sollwert des technischen Parameters des gewalzten Walzgutes liegt als der vorhergehende zweite Erwartungswert, der anhand der (n-1)-ten Trainingsdaten ermittelt wurde.

7. Verfahren nach Anspruch 5 oder 6, wobei abhängig von dem Ergebnis des Vergleichs des ersten und des zweiten Erwartungswertes mit dem Sollwert des technischen Parameters ein positiver Bewertungswert ermittelt wird, wenn der zweite Erwartungswert näher am vorgegebenen Sollwert des technischen Parameters des gewalzten Walzgutes ist als der erste Erwartungswert, wobei abhängig von dem Ergebnis des Vergleichs ein negativer Bewertungswert ermittelt wird, wenn der erste Erwartungswert näher am Sollwert des technischen Parameters des gewalzten Walzgutes ist als der zweite Erwartungswert, wobei der Bewertungswert verwendet wird, um das neuronale Netz dahingehend zu trainieren, dass der adaptierte Sollwert so ermittelt wird, dass der zweite Erwartungswert möglichst nahe an den vorgegebenen Sollwert des technischen Parameters des gewalzten Walzgutes herankommt oder den vorgegebenen Sollwert des technischen Parameters des gewalzten Walzgutes wenigstens erreicht.

8. Computerimplementiertes Verfahren zum Betreiben einer Walzanlage zum Walzen eines Walzgutes, um nach dem Walzen des Walzgutes ein Walzgut mit einem vorgegebenen Sollwert eines vorgegebenen technischen Parameters zu erhalten, wobei die Walzanlage wenigstens ein Stellglied aufweist, um einen Betriebsparameter der Walzanlage einzustellen,
wobei ein erstes Vorhersagemodell anhand eines Sollwertes eines Steuerparameters eines Stellgliedes einen Erwartungswert für den technischen Parameter des Walzgutes nach dem Walzen mit dem Sollwert des Steuerparameters des Stellgliedes der Walzanlage ermittelt,
wobei ein zweites Vorhersagemodell anhand eines adaptierten Sollwertes des Steuerparameters des Stellgliedes einen zweiten Erwartungswert für den technischen Parameter des Walzgutes nach dem Walzen mit dem adaptierten Sollwert des Steuerparameters des Stellgliedes der Walzanlage ermittelt,
wobei der erste Erwartungswert und der zweite Erwartungswert mit dem vorgegebenen Sollwert des technischen Parameters des gewalzten Walzgutes verglichen werden, und wobei abhängig von dem Ergebnis des Vergleichs ein neuer adaptierter Sollwert des Steuerparameters des Stellgliedes von einem Optimierungsmodul in der Weise ermittelt wird, dass das zweite Vorhersagemodell mit dem neuen adaptierten Sollwert des Steuerparameters einen zweiten Erwartungswert ermittelt, der näher am vorgegebenen Sollwert des technischen Parameters des gewalzten Walzgutes liegt als der vorhergehende zweite Erwartungswert, und wobei der neue adaptierte Sollwert des Steuerparameters für eine Steuerung und/oder Regelung des Stellgliedes der Walzanlage vorgesehen ist.

9. Verfahren nach einem der vorhergehenden Ansprüche, wobei der Steuerparameter des Stellgliedes wenigstens einen Parameter aus der folgenden Gruppe aufweist:
Abstand zweier gegenüber liegender Arbeitswalzen eines Walzgerüstes der Walzanlage;
eine Kraft, mit der eine Arbeitswalze auf das zu walzende Walzgut gedrückt wird;
eine Position einer Walze eines Walzgerüstes entlang
einer Drehachse der Walze;
eine Drehgeschwindigkeit einer Arbeitswalze;
eine Heizleistung einer Heizung der Walzanlage;
eine Kühlleistung einer Kühlung der Walzanlage;
eine Geschwindigkeit des Walzgutes beim Walzen.

10. Verfahren nach einem der vorhergehenden Ansprüche, wobei das erste und/oder das zweite Vorhersagemodell als trainierte neuronale Netze ausgebildet sind.

11. Verfahren nach einem der vorhergehenden Ansprüche, wobei das erste und das zweite Vorhersagemodell identisch ausgebildet sind.

12. Verfahren nach einem der vorhergehenden Ansprüche, wobei der technische Parameter des gewalzten Walzgutes und/oder des Walzgutes vor dem Walzen einen Parameter aus der folgenden Gruppe aufweist:
Breite, Höhe und/oder Länge des Walzgutes;
Legierungszusammensetzung des Walzgutes;
Kontur des Querschnittes des Walzgutes;
Temperatur des Walzgutes;
Temperatur des gewalzten Walzgutes nach einem Aufwickeln des Walzgutes auf eine Rolle.

13. Verfahren nach einem der vorhergehenden Ansprüche, wobei dem zweiten Vorhersagemodell ein Sollwert eines Steuerparameters eines weiteren Stellgliedes der Walzanlage zugeführt wird,
wobei das zweite Vorhersagemodell anhand des Sollwertes des Steuerparameters des weiteren Stellgliedes der Walzanlage einen zweiten Erwartungswert für den technischen Parameter des Walzgut nach dem Walzen mit den Sollwerten der Steuerparameter der weiteren Stellglieder der Walzanlage ermittelt.

14. Verfahren nach Anspruch 13, wobei unter Verwendung des Sollwertes des weiteren Steuerparameters des Stellgliedes und/oder unter Verwendung des Sollwertes des Steuerparameters des weiteren Stellgliedes der Walzanlage der adaptierte Sollwert des Steuerparameters des Stellgliedes und/oder der adaptierte Sollwert des weiteren Steuerparameters des Stellgliedes und/oder der adaptierte Sollwert des Steuerparameters des weiteren Stellgliedes der Walzanlage ermittelt werden und dem zweiten Vorhersagemodell zugeführt werden, und wobei der adaptierte Sollwert des Steuerparameters des Stellgliedes und/oder der adaptierte Sollwert des weiteren Steuerparameters des Stellgliedes und/oder der adaptierte Sollwert des Steuerparameters des weiteren Stellgliedes für eine Steuerung und/oder Regelung des Stellgliedes und/oder der weiteren Stellglieder der Walzanlage vorgesehen sind.

15. Verfahren nach einem der vorhergehenden Ansprüche, wobei das erste Vorhersagemodell einen dritten Erwartungswert für einen weiteren technischen Parameter des Walzgutes nach dem Walzen ermittelt, wobei das zweite Vorhersagemodell einen vierten Erwartungswert für den weiteren technischen Parameter des Walzgutes nach dem Walzen ermittelt, wobei der dritte Erwartungswert und der vierte Erwartungswert mit einem Sollwert des weiteren technischen Parameters für das gewalzte Walzgut verglichen werden, und wobei abhängig von dem Ergebnis des Vergleichs ein neuer adaptierter Sollwert des Steuerparameters des Stellgliedes in der Weise ermittelt wird, dass das zweite Vorhersagemodell mit dem neuen adaptierten Sollwert des Steuerparameters einen vierten Erwartungswert ermittelt, der näher am Sollwert des weiteren technischen Parameters des gewalzten Walzgutes liegt als der vorhergehende vierte Erwartungswert, und wobei der neue adaptierte Sollwert des Steuerparameters für eine Steuerung und/oder Regelung des Stellgliedes der Walzanlage vorgesehen ist.

16. Verfahren zum Betreiben einer Walzanlage zum Walzen eines Walzgutes, damit das Walzgut nach dem Walzen einen vorgegebenen Sollwert mindestens eines vorgegebenen technischen Parameters aufweist, wobei über wenigstens ein Stellglied der Walzanlage wenigstens ein Betriebsparameter der Walzanlage eingestellt wird, wobei mindestens ein adaptierter Sollwert des Steuerparameters für die Steuerung des Stellgliedes der Walzanlage ermittelt wird, und wobei der adaptierte Sollwert des Steuerparameters ausgegeben wird, um das Stellglied der Walzanlage zu steuern, und wobei der adaptierte Sollwert des Steuerparameters von einem Optimierungsmodul nach einem Verfahren der vorhergehenden Ansprüche ermittelt wurde.

17. Rechensystem mit einer Schnittstelle zum Empfangen und zum Ausgeben von Daten, wobei das Rechensystem ausgebildet ist, um ein Verfahren nach einem der vorhergehenden Ansprüche auszuführen.

18. Computerprogramm, umfassend Befehle, die bei der Ausführung des Programms durch ein Rechensystem dieses veranlassen, das Verfahren nach einem der Ansprüche 1 bis 16 auszuführen.
